(19) Europäisches Patentamt
European Patent Office
Office européen des brevets

(11) EP 3 216 634 A1

(12) EUROPEAN PATENT APPLICATION
published in accordance with Art. 153(4) EPC

(43) Date of publication:
13.09.2017 Bulletin 2017/37

(51) Int Cl.:
B60G 17/018 (2006.01)     B60G 17/015 (2006.01)
F16F 9/46 (2006.01)     F16F 15/02 (2006.01)

(21) Application number: 15856206.6

(22) Date of filing: 06.11.2015

(86) International application number:
PCT/JP2015/081390

(87) International publication number:
WO 2016/072511 (12.05.2016 Gazette 2016/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 07.11.2014 JP 2014226735

(71) Applicant: KYB Corporation
Tokyo 105-6111 (JP)

(72) Inventor: MASAMURA, Tatsuya
Tokyo 105-6111 (JP)

(74) Representative: Grünecker Patent- und
Rechtsanwälte
PartG mbB
Leopoldstraße 4
80802 München (DE)

(54) **SUSPENSION DEVICE AND SUSPENSION CONTROL DEVICE**

(57)     A suspension device (S1) includes an actuator (A) capable of generating a thrust force and a controller (C1). The controller (C1) includes a first vibration suppression force computation unit (12) configured to obtain a first vibration suppression force (F1) from a vertical velocity (Vb) of a sprung member (B), a second vibration suppression force computation unit (13) configured to obtain a second vibration suppression force (F2) from a vertical velocity (Vw) of the unsprung member (W) or a relative velocity (Vs) between the sprung member (B) and the unsprung member (Vw), a low-pass filter (L1) having a breakpoint frequency ($\omega c$) between a sprung resonance frequency ($\omega b$) and an unsprung resonance frequency ($\omega w$) and processing a signal (Fw) in the course of obtaining the second vibration suppression force (F2) using the second vibration suppression force computation unit (13), and a target thrust force computation unit (15) configured to obtain a target thrust force of the actuator (A) on the basis of the first vibration suppression force (F1) and the second vibration suppression force (F2).

FIG. 1

**Description**

TECHNICAL FIELD

The present invention relates to a suspension device and a suspension control unit.

BACKGROUND ART

As such a type of the suspension device, for example, there is known a suspension device provided with a hydraulic cylinder interposed between a sprung member as a vehicle chassis and an unsprung member as a traveling wheel to actively exert a thrust force and a controller for controlling the hydraulic cylinder, the suspension device serving as an active suspension device.

The controller obtains a vertical velocity of the sprung member by processing a vertical acceleration of the sprung member detected by an acceleration sensor with a low-pass filter and obtains a required thrust force of the hydraulic cylinder necessary to suppress a vibration in the sprung member by multiplying the vertical velocity by a gain. In addition, the controller processes a vertical acceleration of the unsprung member with a band-pass filter and obtains a required thrust force of the hydraulic cylinder necessary to suppress a vibration in the unsprung member by multiplying the vertical acceleration by a gain. A resultant force between these thrust forces is set as a final target thrust force (for example, refer to JP 63-258207 A).

By obtaining the target thrust force in this manner, it is possible to suppress a vibration in the sprung member and the unsprung member using the hydraulic cylinder.

SUMMARY OF INVENTION

The suspension device performs control for suppressing a vibration in the unsprung member. The unsprung member typically has a resonance frequency of around 10 Hz. For this reason, the hydraulic cylinder is required to generate a thrust force capable of suppressing a vibration in a frequency band of around 10 Hz, and the suspension device is required to have a very high response characteristic.

In general, as a control valve for controlling the thrust force of the hydraulic cylinder, an electromagnetic valve provided with a valve body driven by a solenoid is employed. The solenoid has a response delay, so that it is difficult to control the electromagnetic valve with high accuracy at a frequency band of around 10 Hz. For this reason, using a suspension device provided with an electromagnetic valve, it is difficult to improve a vehicle ride quality.

The present invention provides a suspension device and a suspension control unit capable of improving a vehicle ride quality without using a high responsiveness device.

According to one aspect of the present invention, a suspension device includes: an actuator interposed between a sprung member and an unsprung member of a vehicle and capable of generating a thrust force; and a controller configured to control the actuator. The controller includes: a first vibration suppression force computation unit configured to obtain a first vibration suppression force from a vertical velocity of the sprung member, a second vibration suppression force computation unit configured to obtain a second vibration suppression force from a vertical velocity of the unsprung member or a relative velocity between the sprung member and the unsprung member, a low-pass filter having a breakpoint frequency between a sprung resonance frequency and an unsprung resonance frequency and processing a signal in a course of obtaining the second vibration suppression force in the second vibration suppression force computation unit, and a target thrust force computation unit configured to obtain a target thrust force of the actuator on the basis of the first vibration suppression force and the second vibration suppression force.

According to another aspect of the present invention, a suspension control unit configured to control an actuator interposed between a sprung member and an unsprung member of a vehicle, the actuator being capable of generating a thrust force, the suspension control unit includes: a first vibration suppression force computation unit configured to obtain a first vibration suppression force from a vertical velocity of the sprung member; a second vibration suppression force computation unit configured to obtain a second vibration suppression force from a vertical velocity of the unsprung member or a relative velocity between the sprung member and the unsprung member; a low-pass filter having a breakpoint frequency between a sprung resonance frequency and an unsprung resonance frequency and processing a signal in a course of obtaining the second vibration suppression force in the second vibration suppression force computation unit; and a target thrust force computation unit configured to obtain a target thrust force of the actuator on the basis of the first vibration suppression force and the second vibration suppression force.

BRIEF DESCRIPTION OF DRAWINGS

FIG. 1 is a diagram illustrating a suspension device and a suspension control unit according to a first embodiment;
FIG. 2 is a diagram illustrating a frequency characteristic of a low-pass filter;
FIG. 3 is a flowchart illustrating a processing flow for obtaining a target thrust force in a suspension control unit according to the first embodiment;
FIG. 4 is a diagram for describing motions of the suspension device and the vehicle according to the first embodiment in a dynamic sense;
FIG. 5A is a diagram illustrating a frequency characteristic of a vibration transfer rate of an unsprung member for a road surface input;
FIG. 5B is a diagram illustrating a frequency characteristic of a vibration transfer rate of a sprung member for a road surface input;
FIG. 6 is a diagram illustrating a suspension device and a suspension control unit according to a first modification of the first embodiment;
FIG. 7 is a flowchart illustrating a processing flow for obtaining a target thrust force in a suspension control unit according to a first modification of the first embodiment;
FIG. 8 is a diagram illustrating a suspension device and a suspension control unit according to a second modification of the first embodiment;
FIG. 9 is a flowchart illustrating a processing flow for obtaining a target thrust force in a suspension control unit according to a second modification of the first embodiment;
FIG. 10 is a diagram illustrating a suspension device and a suspension control unit according to a second embodiment;
FIG. 11 is a flowchart illustrating a processing flow for obtaining a target thrust force in a suspension control unit according to a second embodiment;
FIG. 12 is a diagram illustrating a suspension device and a suspension control unit according to a first modification of the second embodiment;
FIG. 13 is a flowchart illustrating a processing flow for obtaining a target thrust force in a suspension control unit according to a first modification of the second embodiment;
FIG. 14 is a diagram illustrating a suspension device and a suspension control unit according to a second modification of the second embodiment;
FIG. 15 is a flowchart illustrating a processing flow for obtaining a target thrust force in a suspension control unit according to a second modification of the second embodiment; and
FIG. 16 is a diagram illustrating an exemplary configuration of an actuator preferably employed in the suspension device.

DESCRIPTION OF EMBODIMENTS

Embodiments of the present invention will now be described with reference to the accompanying drawings.

<First Embodiment>

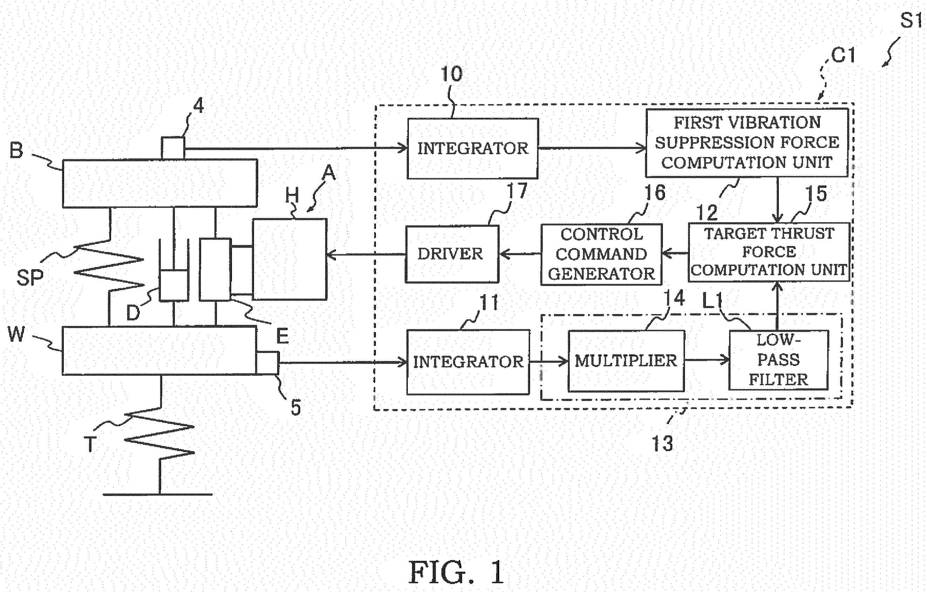

A suspension device S1 according to a first embodiment of the present invention will be described with reference to FIG. 1.
The suspension device S1 includes an actuator A interposed between a sprung member B as a vehicle chassis and an unsprung member W as a traveling wheel to generate a thrust force, a passive damper D interposed between the sprung member B and the unsprung member W in parallel with the actuator A, and a controller C1 as a suspension control unit for controlling the actuator A.
The actuator A includes an extensible/contractible body E provided with a cylinder (not shown), a piston movably inserted into the cylinder to partition the cylinder into an extension-side chamber and a contraction-side chamber, and a rod movably inserted into the cylinder and connected to the piston, and a hydraulic pressure unit H that supplies and distributes fluid to the extension-side chamber and the contraction-side chamber to extensibly or contractibly drive the extensible/contractible body E.
As illustrated in FIG. 1, the extensible/contractible body E is interposed between the sprung member B and the unsprung member W of a vehicle. In FIG. 1, a vehicle is illustrated schematically, in which a suspension spring SP is installed between the unsprung member W and the sprung member B in parallel with the actuator A. In addition, a tire T installed in the traveling wheel serves as a spring provided between the road surface and the unsprung member W. In addition, a damper D is provided between the unsprung member W and the sprung member B in parallel with the actuator A. Although not shown specifically, the damper D is an extensible/contractible passive damper that exerts a damping force for suppressing extension or contraction when an external force is applied.
Although not shown specifically, the hydraulic pressure unit H has a hydraulic pressure source and a switching member capable of selectively supplying the fluid supplied from the hydraulic pressure source to any one of the extension-side chamber R1 and the contraction-side chamber R2 of the extensible/contractible body E. The switching member and the hydraulic pressure source of the hydraulic pressure unit H are driven by an electric current supplied from the controller C1. As the hydraulic pressure source and the switching member are driven, the fluid is supplied to the extension-side chamber R1 or the contraction-side chamber R2 of the extensible/contractible body E to extensibly or contractibly drive the extensible/contractible body E.

Meanwhile, the controller C1 calculates a target thrust force Fref to be generated in the actuator A. That is, the controller C1 supplies an electric current to the hydraulic pressure source and the switching member to allow the actuator A to exert the target thrust force Fref. In this manner, the actuator A is controlled by the controller C1. As the hydraulic pressure source, a pump driven by an accumulator or an engine of a vehicle may also be employed. In this case, if a control valve for controlling a pressure of the fluid supplied from the hydraulic pressure source such as a pressure control valve and the like is provided, the controller C1 can control the pressure of the fluid supplied from the hydraulic pressure source using this control valve. Therefore, the controller C1 is not necessary to directly control driving of the hydraulic pressure source.

The controller C1 receives a vertical acceleration Gb of the sprung member B detected by an acceleration sensor 4 installed in the sprung member B and a vertical acceleration Gw of the unsprung member W detected by an acceleration sensor 5 installed in the unsprung member W. The controller C1 processes such accelerations Gb and Gw and outputs an electric current for controlling the actuator A to the hydraulic pressure unit H.

The controller C1 has a low-pass filter L1 for filtering the vertical velocity Vw of the unsprung member W and obtains a target thrust force Fref of the actuator A on the basis of a first vibration suppression force F1 obtained from the vertical velocity Vb of the sprung member B and a second vibration suppression force F2 obtained from a velocity Vw processed by the low-pass filter L1.

Specifically, the controller C1 includes an integrator 10 for integrating the acceleration Gb of the sprung member B input from the acceleration sensor 4 to obtain the vertical velocity Vb of the sprung member B, an integrator 11 for integrating the acceleration Gw of the unsprung member W input from the acceleration sensor 5 to obtain the vertical velocity Vw of the unsprung member W, a first vibration suppression force computation unit 12 for multiplying the velocity Vb output from the integrator 10 by a gain Cb to obtain the first vibration suppression force F1, a second vibration suppression force computation unit 13 having a multiplier 14 for multiplying the velocity Vw by a gain Cw and processing a signal output from the multiplier 14 using the low-pass filter L1 to obtain the second vibration suppression force F2, a target thrust force computation unit 15 for adding the first vibration suppression force F1 and the second vibration suppression force F2 to obtain the target thrust force Fref to be generated by the actuator A, a control command generator 16 configured to generate a control command transmitted to the switching member and the hydraulic pressure source of the hydraulic pressure unit H on the basis of the target thrust force Fref, and a driver 17 configured to output an electric current for driving the switching member and the hydraulic pressure source of the hydraulic pressure unit H by receiving the control command from the control command generator 16.

The integrator 10 obtains the velocity Vb by integrating the acceleration Gb of the sprung member B. The integrator 10 may be, for example, a low-pass filter capable of simulatively integrating the acceleration Gb. Similarly, the integrator 11 may be a low-pass filter capable of simulatively integrating the acceleration Gw of the unsprung member W.

The first vibration suppression force computation unit 12 obtains the first vibration suppression force F1 by multiplying the velocity Vb output from the integrator 10 by a gain Cb. The gain Cb is a gain multiplied to the velocity Vb in order to obtain the first vibration suppression force F1 for predominantly suppressing a vibration in the sprung member B. For this reason, the gain Cb is set on the basis of a weight of the sprung member B and the like. The first vibration suppression force computation unit 12 obtains the first vibration suppression force F1 by multiplying the velocity Vb by the gain Cb. Note that, if the first vibration suppression force F1 is not linearly changed relative to the velocity Vb and has a characteristic difficult to be expressed using a numerical function, a relationship between the velocity Vb and the first vibration suppression force F1 may be mapped, and the first vibration suppression force F1 may be obtained from the velocity Vb using a map.

The multiplier 14 obtains a signal Fw in the course of obtaining the second vibration suppression force F2 by multiplying the velocity Vw of the unsprung member W output from the integrator 11 by a gain Cw. The gain Cw is a gain multiplied to the velocity Vw in order to obtain the second vibration suppression force F2 for predominantly suppressing a vibration in the unsprung member W. For this reason, the gain Cw is set on the basis of a weight of the unsprung member W and the like.

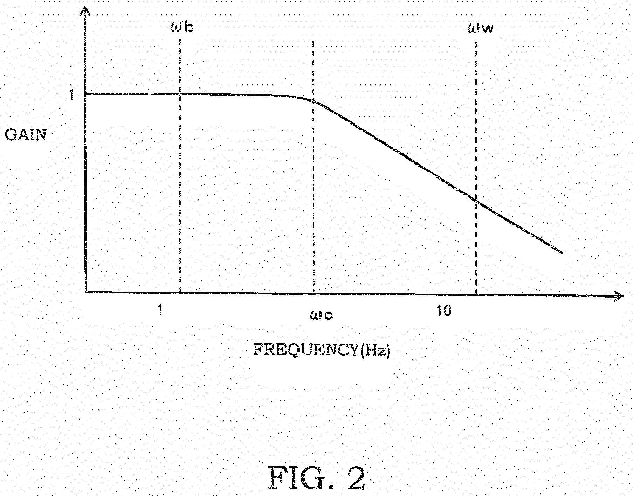

As illustrated in FIG. 2, the low-pass filter L1 removes, from the frequency components of the signal Fw, a frequency component of a frequency band of the unsprung resonance frequency ωw as a resonance frequency of the unsprung member W and passes a frequency component of a frequency band the sprung resonance frequency ωb as a resonance frequency of the sprung member B. For this reason, the low-pass filter L1 has a frequency characteristic in which a breakpoint frequency ωc is provided between the sprung resonance frequency ωb and the unsprung resonance frequency ωw. The breakpoint frequency ωc may be set arbitrarily between the sprung resonance frequency ωb and the unsprung resonance frequency ωw. The functionality obtained by the low-pass filter L1 as described above is to remove a frequency component of a frequency band of the unsprung resonance frequency ωw from the frequency components of the velocity Vw and pass a frequency component of a frequency band of the sprung resonance frequency ωb. Therefore, the breakpoint frequency ωc may be set around a median value between the sprung resonance frequency ωb and the unsprung resonance frequency ωw. In a typical vehicle, the sprung resonance frequency ωb is set to approximately 1 Hz, and the unsprung resonance frequency ωw is set to approximately 10 Hz. Therefore, the breakpoint frequency ωc as a frequency characteristic of the low-pass filter L1 may be set to a range of, for example, 4 Hz or higher and 7 Hz or lower.

The second vibration suppression force F2 is obtained as the signal Fw output from the multiplier 14 is processed by the low-pass filter L1. That is, the second vibration suppression force computation unit 13 includes the multiplier 14 and the low-pass filter L1. The second vibration suppression force computation unit 13 obtains the signal Fw in the course of obtaining the second vibration suppression force F2 by multiplying the velocity Vw by the gain Cw. Alternatively, for example, if the second vibration suppression force F2 is not linearly changed relative to the velocity Vw, and has a characteristic difficult to be expressed using a numerical function, a relationship between the velocity Vw and the signal Fw may be mapped, and the signal Fw may be obtained from the velocity Vw using a map. In addition, the signal Fw obtained from the multiplier 14 is filtered using the low-pass filter L1. Alternatively, after the filtering of the vertical velocity Vw of the unsprung member W, the second vibration suppression force F2 may be obtained by multiplying the filtering result by the gain Cw in the multiplier 14. In this manner, any signal in the course of computing the second vibration suppression force F2 from the vertical velocity Vw of the unsprung member W may be processed by the low-pass filter L1. For this reason, when the processing using the low-pass filter L1 is performed may be determined arbitrarily.

The target thrust force computation unit 15 adds the first vibration suppression force F1 and the second vibration suppression force F2 to obtain the target thrust force Fref to be generated by the actuator A. The second vibration suppression force F2 is set to a very small value because a vibration frequency of the velocity Vw set around the unsprung resonance frequency ωw does not easily pass through the low-pass filter L1. Similarly, for the first vibration suppression force F1, since the velocity Vb is a vertical velocity of the sprung member B, a frequency component of the velocity Vb increases around the sprung resonance frequency ωb, but decreases in a band exceeding the sprung resonance frequency ωb or its vicinity. Therefore, the target thrust force Fref becomes a very small value in a high frequency area around the unsprung resonance frequency ωw and higher.

The control command generator 16 generates a control command transmitted to the switching member and the hydraulic pressure source of the hydraulic pressure unit H on the basis of the target thrust force Fref obtained by the target thrust force computation unit 15. Specifically, a control command transmitted to the switching member is generated depending on a direction of the target thrust force Fref, that is, a direction of the thrust force generated by the actuator A, and a control command for instructing an electric current flowing to the hydraulic pressure source is generated from the magnitude of the target thrust force Fref.

If the switching member is, for example, an electromagnetic type direction switching valve and connects any one of the extension-side chamber R1 and the contraction-side chamber R2 to the hydraulic pressure source depending on whether or not an electric current is supplied to the solenoid of the direction switching valve, the control command of the control command generator 16 for driving the switching member may be a control command for instructing whether or not an electric current is applied to the solenoid. For example, if the hydraulic pressure source is a pump driven by a motor, the control command of the current command generator 16 for driving the motor may be a control command for instructing an electric current amount applied to the motor. In this manner, the control command generator 16 may generate the control command depending on a driving unit necessary to control extension or contraction of the actuator A. As described above, if the hydraulic pressure unit H has a pressure control valve, and the control of the supplied pressure is performed by the pressure control valve, the control command generator 16 may generate the control command for instructing an electric current amount applied to the solenoid of the pressure control valve.

The driver 17 outputs an electric current applied to the driving unit necessary to control extension/contraction of the actuator A, that is, in this case, each of the switching member and the hydraulic pressure source of the hydraulic pressure unit H in response to the control command input from the control command generator 16.

The driver 17 has a driving circuit for driving the motor and the solenoid in a pulse-width modulation (PWM) method, if the hydraulic pressure source is a pump driven by a motor and the switching member is a direction switching valve driven by the solenoid. As the driver 17 receives the control command from the control command generator 16, the electric current is supplied to the solenoid and the motor in response to the command. Alternatively, each driving circuit of the driver 17 may be any driving circuit other than the PWM-type driving circuit.

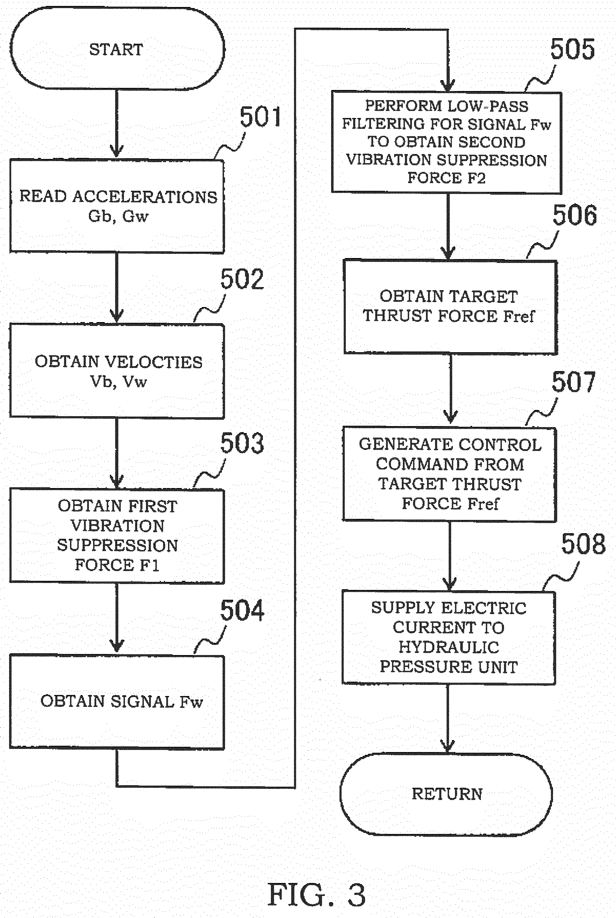

Next, a series of processing flow performed by the controller C1 will be described. As illustrated in the flowchart of FIG. 3, the controller C1 reads the vertical acceleration Gb of the sprung member B and the vertical acceleration Gw of the unsprung member W (step 501). Subsequently, the velocities Vb and Vw are obtained by integrating the accelerations Gb and Gw (step 502). Then, the controller C1 obtains the first vibration suppression force F1 by multiplying the velocity Vb by the gain Cb (step 503). In addition, the controller C1 multiplies the velocity Vw by the gain Cw to obtain a signal Fw (step 504), and performs filtering for the obtained signal Fw using the low-pass filter L1 to obtain the second vibration suppression force F2 by removing a frequency component exceeding the unsprung resonance frequency ωw from the signal Fw (step 505).

The controller C1 adds the first vibration suppression force F1 and the second vibration suppression force F2 to obtain the target thrust force Fref (step 506). In addition, the controller C1 generates a control command from the target thrust force Fref (step 507) and supplies an electric current from the driver 17 to the switching member and the hydraulic pressure source of the hydraulic pressure unit H (step 508). By repeating the aforementioned process, the controller C1 controls the actuator A. Note that the aforementioned series of processing flows are just for illustrative purposes and may be changed appropriately.

In the suspension device S1 and the controller C1 as a suspension control unit configured as described above, the target thrust force Fref of the actuator A is obtained on the basis of the first vibration suppression force F1 obtained from the vertical velocity Vb of the sprung member B and the second vibration suppression force F2 processed by the low-pass filter L1. For this reason, for vibrations of the sprung member B and the unsprung member W in a frequency area around the unsprung resonance frequency ωw and higher, the target thrust force Fref is significantly reduced, and the thrust force generated by the actuator A is also significantly reduced.

In this manner, if the sprung member B and the unsprung member W are vibrated at a frequency band of the unsprung resonance frequency ωw, the thrust force generated by the actuator A of the suspension device S1 is reduced, so that the vibrations of the sprung member B and the unsprung member W are suppressed by a passive damping force of the damper D. As a result, a vehicle ride quality can be improved.

If the sprung member B and the unsprung member W are vibrated at a frequency band of the unsprung resonance frequency ωw, the target thrust force Fref becomes a small value. Therefore, even when there is a response delay in the switching member or the hydraulic pressure source, a vehicle ride quality is not degraded.

From the aforementioned description, using the suspension device S1 and the controller C1 as a suspension control unit, it is possible to improve a vehicle ride quality without using a high-responsiveness device.

If the unsprung member W is vibrated due to unevenness on a vehicle traveling road surface, this vibration is transmitted to the sprung member B by virtue of a repulsive force of the suspension spring SP and a damping force of the damper D, so that the sprung member B is vibrated.

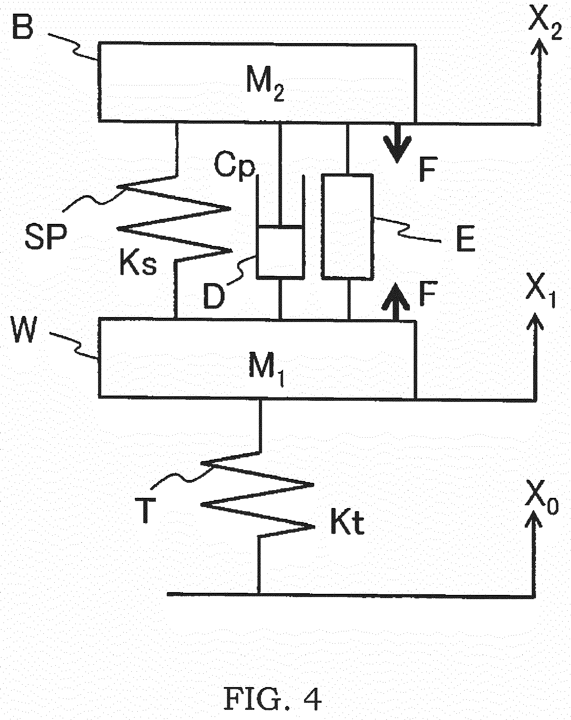

As illustrated in FIG. 4, assuming "$M_1$" denotes a mass of the unsprung member W, "$M_2$" denotes a mass of the sprung member B, "$X_0$" denotes a road surface displacement, "$X_1$" denotes a vertical displacement of the unsprung member W, "$X_2$" denotes a vertical displacement of the sprung member B, each upward direction is set to "positive", "F" denotes a thrust force of the actuator A, a contracting direction of the extensible/contractible body E is set to "positive," "Ks" denotes a spring constant of the suspension spring SP, and "Cp" denotes a damping coefficient of the damper D, a motion equation of the sprung member B can be expressed as the following Formula (1).

[Formula 1]

$$M_2 X_2'' = -C_p X_2' + C_p X_1' - K_s(X_2 - X_1) - F \quad \cdots (1)$$

Since the factor "$-C_p X_2'$" in the right side of Formula (1) refers to a force opposite to a motion of the sprung member B, it acts to suppress a vibration of the sprung member B at all times and exhibits an effect of preventing a vibration of the sprung member B. Meanwhile, the factor "$C_p X_1'$" applies an effect of exciting a vibration of the sprung member B or in contrast, suppressing a vibration of the sprung member B depending on a sign of the value "$X_1'$." Here, since the target thrust force Fref is obtained by adding the first vibration suppression force F1 and the second vibration suppression force F2, the following Formula (2) is established.

[Formula 2]

$$F = C_2 X_2' + C_1 X_1' \quad \cdots (2)$$

If this Formula (2) is substituted with Formula (1), the following Formula (3) can be obtained.

[Formula 3]

$$M_2 X_2'' = -(C_p + C_2)X_2' + (C_p - C_1)X_1' - K_s(X_2 - X_1) \quad \cdots (3)$$

Focusing on the first factor of the right side of Formula (3), the first vibration suppression force F1 is a force proportional to the velocity Vb of the sprung member B, and, similar to the force of the damper D for suppressing a vibration of the sprung member B, serves as a force for suppressing and damping a vibration of the sprung member B at all times. Meanwhile, focusing on the second factor of the right side of Formula (3), the second vibration suppression force F2 serves as a force for canceling the force changing depending on a sign indicating whether a vibration of the sprung member B is excited or suppressed. That is, if the gains are equal (Cw=Cp), a parenthesized value of the second factor of the right side becomes zero. Therefore, the velocity Vw of the unsprung member W does not affect a vibration of the sprung member B. That is, if the second vibration suppression force F2 is obtained by multiplying the velocity Vw of the unsprung member W by the gain Cw equal to the damping coefficient of the damper D, the second factor of the right side of Formula (3) becomes zero. Therefore, a force of exciting a vibration of the sprung member B is not exerted, and a mode of exciting a vibration of the sprung member B does not occur. As a result, it is possible to effectively suppress a vibration of the sprung member B.

Note that the thrust force exerted by the actuator A acts to reduce a damping effect for a vibration of the unsprung member W. Therefore, if the unsprung member W vibrates at the unsprung resonance frequency ωw, the vibration of the unsprung member W is excited. However, according to the first embodiment of the invention, using the low-pass filter L1 having a characteristic capable of establishing the breakpoint frequency ωc as a cut-off frequency between the sprung resonance frequency ωb and the unsprung resonance frequency ωw, filtering is performed for the signal in the course of obtaining the second vibration suppression force F2. For this reason, the value of the second vibration suppression force F2 becomes very small for a vibration at a frequency band of the unsprung resonance frequency ωw, so that the vibration of the unsprung member W can be suppressed by the damping force of the damper D. Meanwhile, the value of the second vibration suppression force F2 becomes large for a frequency area lower than the unsprung resonance frequency ωw, so that it is possible to suppress the vibration of the sprung member B from being excited by the vibration of the unsprung member W. As a result, it is possible to obtain an excellent vibration suppression effect of the sprung member B. Therefore, for a vibration at a frequency band of the unsprung resonance frequency ωw of the unsprung member W, the vibration of the unsprung member W is not excited by the actuator A. Therefore, it is possible to suppress the vibration of the unsprung member W using the damping force of the damper D.

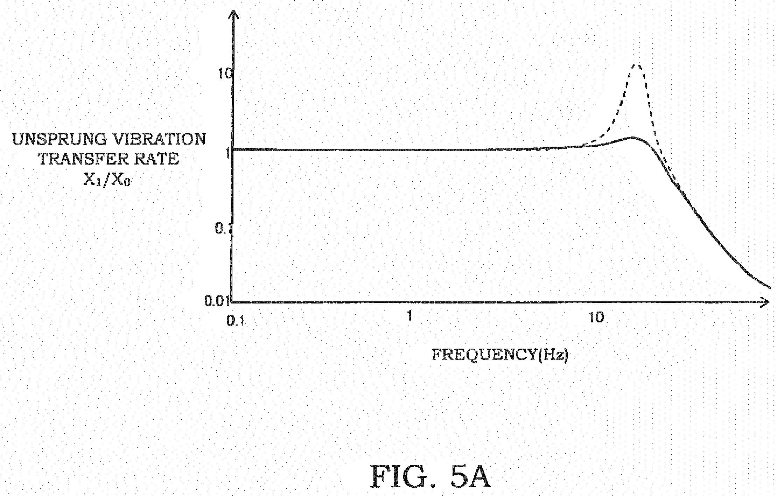

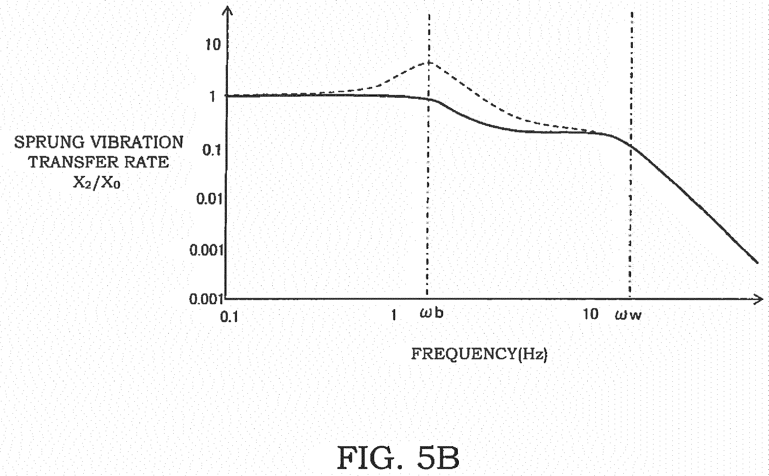

In this manner, using the suspension device S1 and the suspension control unit, it is possible to reduce a vibration of the unsprung member W at a frequency band of the unsprung resonance frequency ωw and reduce a vibration of the sprung member B at a frequency band of the sprung resonance frequency ωb as indicated by the solid line in FIGS. 5A and 5B, compared to a case where a thrust force control of the actuator A is performed by obtaining the second vibration suppression force without using the low-pass filter L1 (as indicated by the dotted line in FIGS. 5A and 5B).

Next, a first modification of the first embodiment will be described.

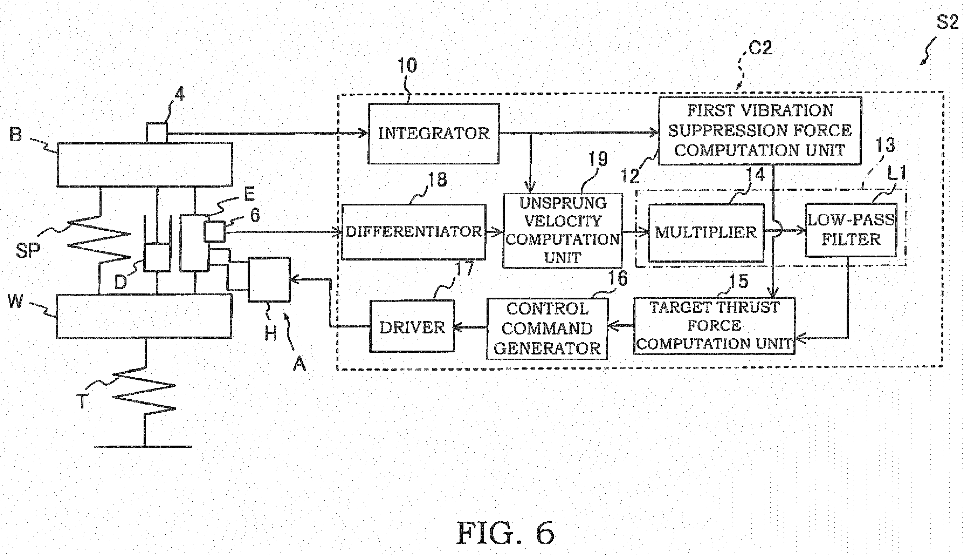

In order to obtain the second vibration suppression force F2, as illustrated in FIG. 6, the velocity Vw of the unsprung member W may be obtained by obtaining a stroke velocity Vs of the extensible/contractible body E as a vertical relative velocity between the sprung member B and the unsprung member W and subtracting the stroke velocity Vs from the velocity Vb of the sprung member B.

Specifically, compared to a configuration of the controller C1 of the suspension device S1 of FIG. 1, a controller C2 of a suspension device S2 of FIG. 6 detects a stroke displacement Xs of the extensible/contractible body E by preparing a stroke sensor 6 instead of the acceleration sensor 5 that detects an acceleration Gw of the unsprung member W. In addition, instead of the integrator 11, a differentiator 18 is provided to obtain the stroke velocity Vs by differentiating the stroke displacement Xs. Furthermore, an unsprung velocity computation unit 19 is provided to obtain the vertical velocity Vw of the unsprung member W by subtracting the stroke velocity Vs from the velocity Vb of the sprung member B obtained by the integrator 10 in the unsprung velocity computation unit 19.

The extensible/contractible body E is connected to the sprung member B and the unsprung member W. For this reason, by installing the stroke sensor 6 in the extensible/contractible body E, it is possible to detect a vertical relative displacement between the sprung member B and the unsprung member W. By differentiating the detected relative displacement, it is possible to obtain the relative velocity. The stroke sensor 6 may be provided integrally with the extensible/contractible body E or may be a separate member.

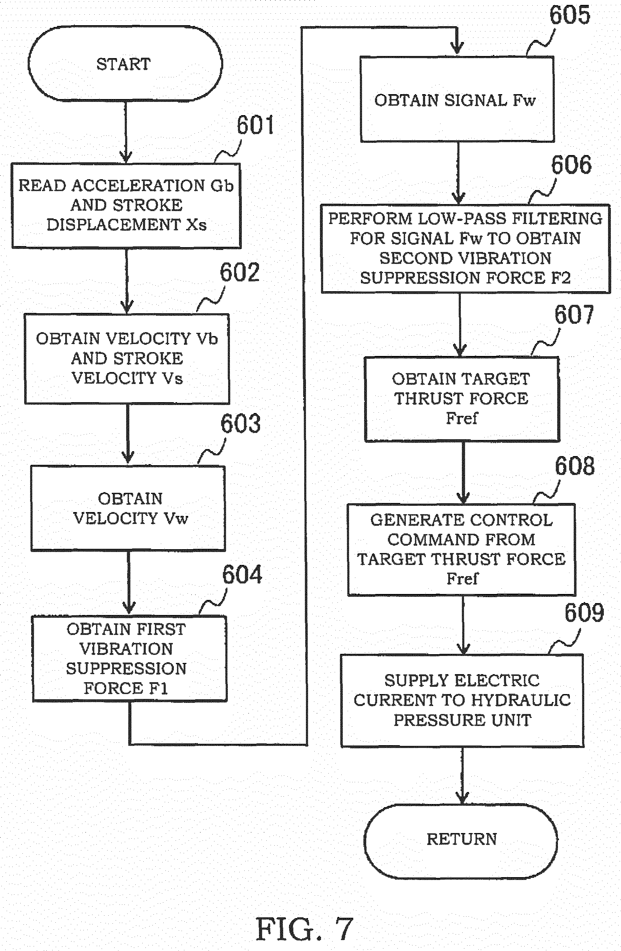

Next, a series of processing flows performed by the controller C2 will be described. As illustrated in the flowchart of FIG. 7, the controller C2 reads the vertical acceleration Gb of the sprung member B and the stroke displacement Xs of the extensible/contractible body E (step 601). Subsequently, the velocity Vb is obtained by integrating the acceleration Gb, and the stroke velocity Vs as a relative velocity between the sprung member B and the unsprung member W is obtained by differentiating the stroke displacement Xs (step 602). Then, the controller C2 obtains the vertical velocity Vw of the unsprung member W by subtracting the stroke velocity Vs from the velocity Vb (step 603). The controller C2 obtains the first vibration suppression force F1 by multiplying the velocity Vb by a gain Cb (step 604). In addition, the controller C2 obtains a signal Fw by multiplying the velocity Vw by a gain Cw (step 605), and performs filtering for the obtained signal Fw using the low-pass filter L1 to obtain the second vibration suppression force F2 by removing a frequency component exceeding the unsprung resonance frequency ωw from the signal Fw (step 606).

The controller C2 obtains the target thrust force Fref by adding the first vibration suppression force F1 and the second vibration suppression force F2 (step 607). In addition, the controller C2 generates a control command from the target thrust force Fref (step 608) and supplies an electric current to the switching member and the hydraulic pressure source of the hydraulic pressure unit H from the driver 17 (step 609). By repeating the aforementioned process, the controller C2 controls the actuator A. Note that the aforementioned processing flow is just for illustrative purposes and may be changed appropriately.

Similarly, the suspension device S2 and the controller C2 as a suspension control unit obtain the target thrust force Fref of the actuator A on the basis of the second vibration suppression force F2 processed by the low-pass filter L1. For this reason, for vibrations of the sprung member B and the unsprung member W in a frequency area around the unsprung resonance frequency $\omega w$ and higher, the thrust force generated from the actuator A becomes very small. Therefore, in this case, the vibrations of the sprung member B and the unsprung member W are suppressed by the passive damping force of the damper D.

Therefore, using the suspension device S2 and the controller C2 as a suspension control unit, similar to the suspension device S1 and the controller C1, it is possible to improve a vehicle ride quality without using a high-responsiveness device.

In a vehicle having a vehicle height adjustment capability such as an air suspension, typically, a relative distance between the sprung member B and the unsprung member W is measured. For this reason, in the suspension device S2 and the controller C2 as a suspension control unit, this measurement value is used as the stroke displacement Xs. Therefore, it is possible to control the actuator A without separately providing a sensor for detecting the stroke displacement Xs.

Next, a second modification of the first embodiment will be described.

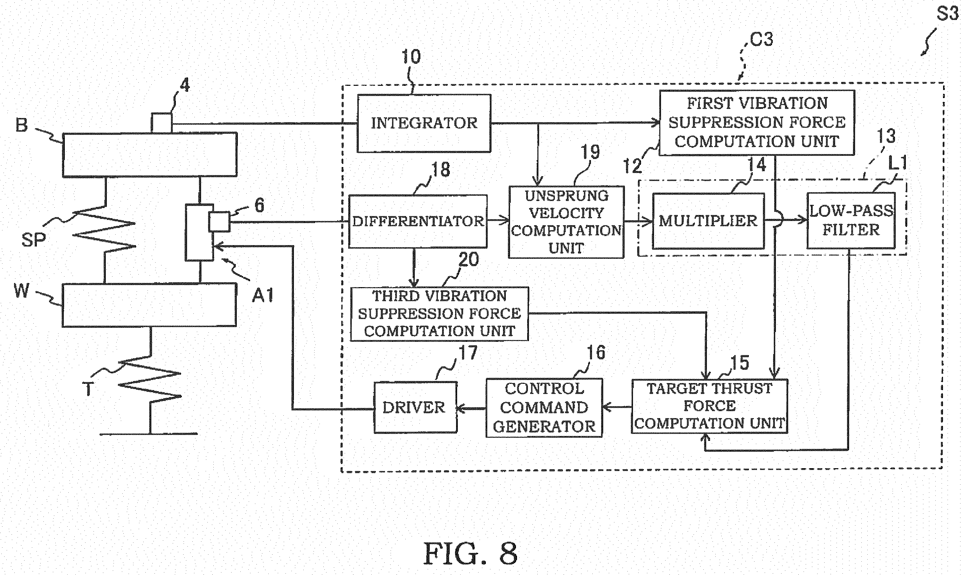

In the suspension devices S1 and S2 described above, the damper D is provided in parallel with the actuator A. Alternatively, as illustrated in FIG. 8, the damper D may be omitted, and the actuator A1 may exert the damping force to be generated by the damper.

Specifically, in the suspension device S3, the controller C3 additionally has a third vibration suppression force computation unit 20 that obtains a third vibration suppression force F3 by multiplying the stroke velocity Vs by a gain Cp corresponding to the damping coefficient of the damper, compared to the controller C2 of the suspension device S2 of FIG. 6. The third vibration suppression force F3 is a force corresponding to the damping force generated by the omitted damper D.

In the target thrust force computation unit 15, the target thrust force Fref is obtained by adding the first vibration suppression force F1, the second vibration suppression force F2, and the third vibration suppression force F3. In this manner, since the third vibration suppression force F3 is added to the target thrust force Fref, the actuator A1 exerts the damping force instead of the omitted damper D. Even in this case, it is possible to improve a vehicle ride quality using the suspension device S3 and the controller C3 as a suspension control unit.

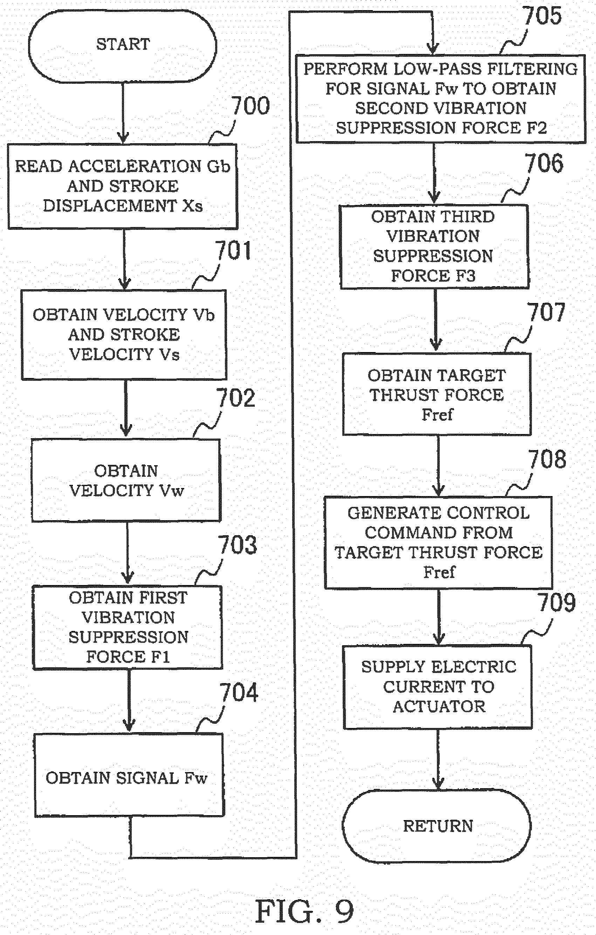

Next, a series of processing flows performed by the controller C3 will be described. As illustrated in the flowchart of FIG. 9, the controller C3 reads the vertical acceleration Gb of the sprung member B and the stroke displacement Xs of the extensible/contractible body E (step 700). Subsequently, the velocity Vb is obtained by integrating the acceleration Gb, and the stroke velocity Vs is obtained by differentiating the stroke displacement Xs (step 701). Then, the controller C3 obtains the vertical velocity Vw of the unsprung member W by subtracting the stroke velocity Vs from the velocity Vb (step 702). The controller C3 obtains the first vibration suppression force F1 by multiplying the velocity Vb by the gain Cb (step 703). In addition, the controller C3 obtains the signal Fw by multiplying the velocity Vw by the gain Cw (step 704). A frequency component exceeding the unsprung resonance frequency $\omega w$ is removed from the signal Fw by performing filtering using the low-pass filter L1 for the obtained signal Fw to obtain the second vibration suppression force F2 (step 705).

The controller C3 obtains the third vibration suppression force F3 by multiplying the stroke velocity Vs by the gain Cp (step 706). In addition, the controller C3 obtains the target thrust force Fref by adding the first vibration suppression force F1, the second vibration suppression force F2, and the third vibration suppression force F3 (step 707). In addition, the controller C3 generates the control command from the target thrust force Fref (step 708) and supplies an electric current to the actuator A1 from the driver 17 (step 709). By repeating the aforementioned process, the controller C3 controls the actuator A1. Note that the aforementioned series of processing flows are just for illustrative purposes and may be changed appropriately.

Even in the suspension device S3 and the controller C3 as a suspension control unit, the target thrust force Fref of the actuator A1 is obtained on the basis of the second vibration suppression force F2 processed by the low-pass filter L1. In addition, the third vibration suppression force F3 obtained from the stroke velocity Vs is added to target thrust force Fref. Therefore, it is possible to generate the damping force using the actuator A1 instead of the damper.

For this reason, for vibrations of the sprung member B and the unsprung member W in the frequency area around the unsprung resonance frequency $\omega w$ and higher, the first vibration suppression force F1 and the second vibration suppression force F2 actively generated by the actuator A1 as an actuator become very small, so that the vibrations of the sprung member B and the unsprung member W are suppressed by the third vibration suppression force F3 (damping force) generated by the actuator A1 as a damper.

Since the damping force to be generated by the damper is generated by the actuator A1, control responsiveness is obtained up to a frequency band of the unsprung resonance frequency ωw. In the suspension device S3 and the controller C3 as a suspension control unit, an electromagnetic actuator that does not use a hydraulic pressure is employed as the actuator A1. Therefore, it is possible to obtain control responsiveness up to a frequency band of the unsprung resonance frequency ωw and improve a vehicle ride quality.

Since the damping force to be generated by the damper can be generated by the actuator A1, it is possible to omit the damper D. For this reason, it is possible to reduce the manufacturing cost of the suspension device S3.

<Second Embodiment>

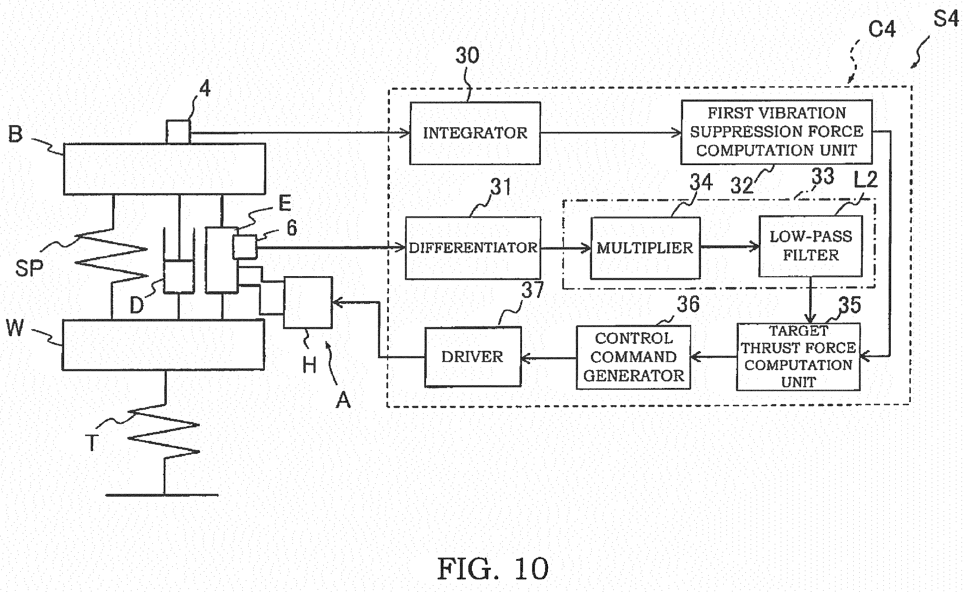

Next, a suspension device S4 and a controller C4 as a suspension control unit according to a second embodiment of the invention will be described with reference to FIG. 10. In the following description, differences from the first embodiment will be focused. In addition, like reference numerals denote like elements as in the first embodiment, and they will not be described repeatedly.

As illustrated in FIG. 10, the suspension device S4 includes an actuator A interposed between a sprung member B as a vehicle chassis and an unsprung member W as a traveling wheel to generate a thrust force, a damper D interposed between the sprung member B and the unsprung member W in parallel with the actuator A, and a controller C4 as a suspension control unit for controlling the actuator A.

Similar to the first embodiment, the actuator A includes an extensible/contractible body E provided with a cylinder (not shown), a piston movably inserted into the cylinder to partition the cylinder into an extension-side chamber and a contraction-side chamber, and a rod movably inserted into the cylinder and connected to the piston, and a hydraulic pressure unit H that supplies and distributes a fluid to the extension-side chamber and the contraction-side chamber to extensibly or contractibly drive the extensible/contractible body E.

Similar to the first embodiment, the controller C4 obtains a target thrust force Fref to be generated by the actuator A and supplies an electric current to the switching member and the hydraulic pressure source of the hydraulic pressure unit H to allow the actuator A to exert the target thrust force Fref.

The controller C4 receives a vertical acceleration Gb of the sprung member B detected by an acceleration sensor 4 installed in the sprung member B and a stroke displacement Xs of the extensible/contractible body E detected by a stroke sensor 6 installed in the extensible/contractible body E as a vertical relative displacement between the sprung member B and the unsprung member W. The controller C4 processes the acceleration Gb and the stroke displacement Xs and outputs an electric current for controlling the actuator A to the hydraulic pressure unit H.

The controller C4 has a low-pass filter L2 for filtering a signal Fd in the course of obtaining the second vibration suppression force F2 from the stroke velocity Vs obtained by differentiating the stroke displacement Xs and obtains the target thrust force Fref of the actuator A on the basis of the first vibration suppression force F1 obtained from the vertical velocity Vb of the sprung member B and the second vibration suppression force F2 processed by the low-pass filter L2.

Specifically, the controller C4 includes an integrator 30 for integrating the acceleration Gb of the sprung member B input from the acceleration sensor 4 to obtain the vertical velocity Vb of the sprung member B, a differentiator 31 for differentiating the stroke displacement Xs of the extensible/contractible body E input from the stroke sensor 6 to obtain a stroke velocity Vs of the extensible/contractible body E as a vertical relative velocity between the sprung member B and the unsprung member W, a first vibration suppression force computation unit 32 for multiplying the velocity Vb output from the integrator 30 by a gain Cb to obtain the first vibration suppression force F1, a second vibration suppression force computation unit 33 having a multiplier 34 for multiplying the stroke velocity Vs by a gain Cs and processing a signal output from the multiplier 34 using a low-pass filter L2 to obtain the second vibration suppression force F2, a target thrust force computation unit 35 for adding the first vibration suppression force F1 and the second vibration suppression force F2 to obtain a target thrust force Fref to be generated by the actuator A to cancel the damping force generated by the damper D, a control command generator 36 that generates a control command transmitted to the switching member and the hydraulic pressure source of the hydraulic pressure unit H on the basis of the target thrust force Fref, and a driver 37 that outputs an electric current for driving the switching member and the hydraulic pressure source of the hydraulic pressure unit H by receiving the control command from the control command generator 36.

The integrator 30 obtains the velocity Vb by integrating the acceleration Gb of the sprung member B. The integrator 30, for example, may be a low-pass filter capable of simulatively integrating the acceleration Gb. Similarly, the integrator 31 may be a high-pass filter capable of simulatively integrating the stroke displacement Xs.

The first vibration suppression force computation unit 32 obtains the first vibration suppression force F1 by multiplying the velocity Vb output from the integrator 30 by a gain Cb. The gain Cb is a gain multiplied to the velocity Vb in order to obtain the first vibration suppression force F1 for predominantly suppressing a vibration in the sprung member B. For this reason, the gain Cb is set on the basis of a weight of the sprung member B and the like. The first vibration suppression force computation unit 32 obtains the first vibration suppression force F1 by multiplying the velocity Vb by the gain Cb. Note that, if the first vibration suppression force F1 is not linearly changed relative to the velocity Vb and has a characteristic difficult to be expressed using a numerical function, a relationship between the velocity Vb and the first vibration suppression force F1 may be mapped, and the first vibration suppression force F1 may be obtained from the velocity Vb using a map.

The multiplier 34 obtains a signal Fd in the course of obtaining the second vibration suppression force F2 by multiplying the stroke velocity Vs as a vertical relative velocity between the sprung member B and the unsprung member W output from the differentiator 31 by a gain Cs. The gain Cs is a gain multiplied to the stroke velocity Vs in order to obtain the second vibration suppression force F2 for suppressing a relative movement of the sprung member B and the unsprung member W.

Similar to the low-pass filter L1 of the first embodiment, as illustrated in FIG. 2, the low-pass filter L2 removes a frequency component of the unsprung resonance frequency ωw as a resonance frequency of the unsprung member W from the frequency components of the signal Fd and passes a frequency component of the sprung resonance frequency ωb as a resonance frequency of the sprung member B. For this reason, the low-pass filter L1 has a frequency characteristic in which a breakpoint frequency ωc is provided between the sprung resonance frequency ωb and the unsprung resonance frequency ωw. The breakpoint frequency ωc of the low-pass filter L2 may be set to a range of, for example, 4 Hz or higher and 7 Hz or lower.

The second vibration suppression force F2 is obtained as the signal Fd output from the multiplier 34 is processed by the low-pass filter L2. That is, the second vibration suppression force computation unit 33 includes the multiplier 34 and the low-pass filter L2. The second vibration suppression force computation unit 33 obtains the signal Fd in the course of obtaining the second vibration suppression force F2 by multiplying the stroke velocity Vs by the gain Cs. Alternatively, for example, if the second vibration suppression force F2 is not linearly changed relative to the stroke velocity Vs, and has a characteristic difficult to be expressed using a numerical function, a relationship between the stroke velocity Vs and the signal Fd may be mapped, and the signal Fd may be obtained from the stroke velocity Vs using a map. In addition, the signal Fd obtained from the multiplier 34 is filtered using the low-pass filter L2. Alternatively, after the filtering of the stroke velocity Vs, the second vibration suppression force F2 may be obtained by multiplying the filtering result by the gain Cs using the multiplier 34. In this manner, any signal in the course of computing the second vibration suppression force F2 from the stroke velocity VS may be processed by the low-pass filter L2. For this reason, when the processing using the low-pass filter L2 is performed may be determined arbitrarily.

The target thrust force computation unit 35 adds the first vibration suppression force F1 and the second vibration suppression force F2 to obtain a target thrust force Fref to be generated by the actuator A such that the damping force generated by the damper D is cancelled. The second vibration suppression force F2 is set to a very small value because a vibration frequency of the stroke velocity Vs set around the unsprung resonance frequency ωw does not easily pass through the low-pass filter L2. Similarly, for the first vibration suppression force F1, since the velocity Vb is a vertical velocity of the sprung member B, a frequency component of the velocity Vb increases around the sprung resonance frequency ωb, but decreases in a band exceeding the sprung resonance frequency ωb or its vicinity. Therefore, the target thrust force Fref becomes a very small value in a high frequency area around the unsprung resonance frequency ωw and higher.

Similar to the first embodiment, the control command generator 36 generates a control command transmitted to the switching member and the hydraulic pressure source of the hydraulic pressure unit H on the basis of the target thrust force Fref obtained by the target thrust force computation unit 35. Specifically, a control command transmitted to the switching member is generated depending on a direction of the target thrust force Fref, that is, a direction of the thrust force generated by the actuator A, and a control command for instructing an electric current flowing to the hydraulic pressure source is generated from the magnitude of the target thrust force Fref.

The driver 37 outputs an electric current applied to a driving unit necessary to control extension/contraction of the actuator A, that is, in this case, each of the switching member and the hydraulic pressure source of the hydraulic pressure unit H in response to the control command input from the control command generator 36.

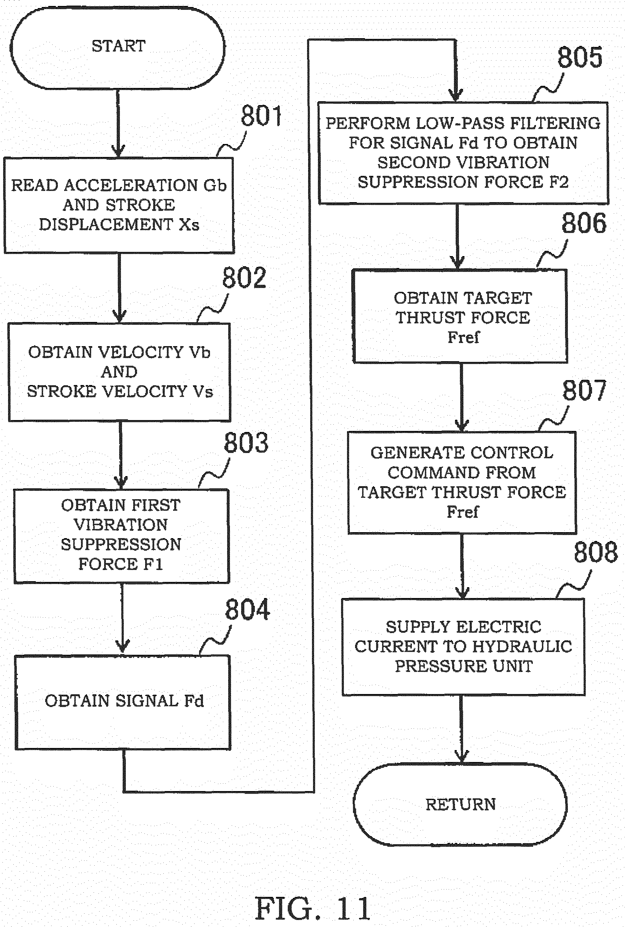

Next, a series of processing flow performed by the controller C4 will be described. As illustrated in the flowchart of FIG. 11, the controller C4 reads the vertical acceleration Gb of the sprung member B and the stroke displacement Xs (step 801). Subsequently, the velocity Vb is obtained by integrating the acceleration Gb, and the stroke velocity Vs is obtained by differentiating the stroke displacement Xs (step 802). Then, the controller C4 obtains the first vibration suppression force F1 by multiplying the velocity Vb by the gain Cb (step 803). In addition, the controller C4 multiplies the stroke velocity Vs by the gain Cs to obtain the signal Fd (step 804), and performs filtering for the obtained signal Fd using the low-pass filter L2 to obtain the second vibration suppression force F2 by removing a frequency component exceeding the unsprung resonance frequency ωw of the signal Fd (step 805).

The controller C4 adds the first vibration suppression force F1 and the second vibration suppression force F2 to obtain the target thrust force Fref such that the damping force generated by the damper D is cancelled (step 806). In addition, the controller C4 generates a control command from the target thrust force Fref (step 807) and supplies an electric current from the driver 37 to the switching member and the hydraulic pressure source of the hydraulic pressure unit H (step 808). By repeating the aforementioned process, the controller C4 controls the actuator A. Note that the aforementioned series of processing flows are just for illustrative purposes and may be changed appropriately.

In the suspension device S4 and the controller C4 as a suspension control unit configured as described above, the target thrust force Fref of the actuator A is obtained on the basis of the first vibration suppression force F1 obtained from the vertical velocity Vb of the sprung member B and the second vibration suppression force F2 processed by the low-pass filter L2. For this reason, for vibrations of the sprung member B and the unsprung member W in a frequency area around the unsprung resonance frequency ωw and higher, the target thrust force Fref is significantly reduced, and the thrust force generated by the actuator A is also signifcantly reduced.

In this manner, if the sprung member B and the unsprung member W are vibrated at a frequency band of the unsprung resonance frequency ωw, the thrust force generated by the actuator A of the suspension device S4 is reduced, so that the vibrations of the sprung member B and the unsprung member W are suppressed by the passive damping force of the damper D. As a result, a vehicle ride quality can be improved.

If the sprung member B and the unsprung member W are vibrated at a frequency band of the unsprung resonance frequency ωw, the target thrust force Fref becomes a small value. Therefore, even when there is a response delay in the switching member or the hydraulic pressure source, a vehicle ride quality is not degraded.

From the aforementioned description, using the suspension device S4 and the controller C4 as a suspension control unit, it is possible to improve a vehicle ride quality without using a high-responsiveness device.

In a vehicle having a vehicle height adjustment capability such as an air suspension, typically, a relative distance between the sprung member B and the unsprung member W is measured. For this reason, in the suspension device S4 and the controller C4 as a suspension control unit, this measurement value is used as the stroke displacement Xs. Therefore, it is possible to control the actuator A without separately providing a sensor for detecting the stroke displacement Xs.

As illustrated in FIG. 4, assuming "$M_1$" denotes a mass of the unsprung member W, "$M_2$" denotes a mass of the sprung member B, "$X_0$" denotes a road surface displacement, "$X_1$" denotes a vertical displacement of the unsprung member W, "$X_2$" denotes a positive ascending vertical displacement of the sprung member B, "F" denotes a thrust force of the actuator A, a contracting direction of the extensible/contractible body E is set to "positive," "Ks" denotes a spring constant of the suspension spring SP, and "Cp" denotes a damping coefficient of the damper D, a motion equation of the sprung member B can be expressed as the following Formula (4).

[Formula 4]

$$M_2 X_2'' = -C_p(X_2'-X_1')-K_s(X_2-X_1)-F \quad \cdots (4)$$

The factor "$-C_p(X_2'-X_1')$" in the right side of Formula (4) refers to a force exerted by the damper D and exhibits an effect of exciting a vibration of the sprung member B or damping a vibration of the sprung member B depending on a sign of the value "$X_1'$."

Here, since the target thrust force Fref is obtained by adding the first vibration suppression force F1 and the second vibration suppression force F2, the following Formula (5) is established.

[Formula 5]

$$F = C_2 X_2' - C_1(X_2'-X_1') \quad \cdots (5)$$

If this Formula (5) is substituted with Formula (4), the following Formula (6) can be obtained.

[Formula 6]

$$M_2 X_2'' = -C_2 X_2' - C_p(X_2'-X_1') + C_1(X_2'-X_1') - K_s(X_2-X_1) \quad \cdots (6)$$

Focusing on the first factor of the right side of Formula (6), the factor "$-C_2 X_2'$" is applied opposite to a motion of the sprung member B and suppresses a vibration of the sprung member B at all times, so that an effect of controlling a vibration of the sprung member B can be obtained. Meanwhile, the factor "$+C_1(X_2'-X_1')$" in the right side of Formula (6) is applied so as to cancel the factor "$-C_p(X_2'-X_1')$" in the right side of Formula (6). Therefore, it applies an effect of reducing a force of exciting a vibration of the sprung member B. As recognized from Formula (6), the force exerted by the damper D is perfectly cancelled when "$C_1 = C_p$" so that a vibration suppression effect is applied to the sprung member B at all times by virtue of the force "-C$_2$X$_2$'."

Note that the thrust force exerted by the actuator A acts to reduce a damping effect for a vibration of the unsprung member W. Therefore, if the unsprung member W vibrates at the unsprung resonance frequency ωw, the vibration of the unsprung member W is excited. However, according to the second embodiment of the invention, using the low-pass filter L2 having a characteristic capable of establishing the breakpoint frequency ωc as a cut-off frequency between the sprung resonance frequency ωb and the unsprung resonance frequency ωw, filtering is performed for the signal in the course of obtaining the second vibration suppression force F2. For this reason, the value of the second vibration suppression force F2 becomes very small for a vibration at a frequency band of the unsprung resonance frequency ωw, so that the vibration of the unsprung member W can be suppressed by the damping force of the damper D. Meanwhile, the value of the second vibration suppression force F2 becomes large for a frequency area lower than the unsprung resonance frequency ωw, so that it is possible to suppress the vibration of the sprung member B from being excited by the vibration of the unsprung member W. As a result, it is possible to obtain an excellent vibration suppression effect of the sprung member B. Therefore, for a vibration at a frequency band of the unsprung resonance frequency ωw of the unsprung member W, the vibration of the unsprung member W is not excited by the actuator A. Therefore, it is possible to suppress the vibration of the unsprung member W using the damping force of the damper D.

In this manner, similar to the first embodiment, using the suspension device S4 and the suspension control unit, it is possible to reduce a vibration of the unsprung member W at a frequency band of the unsprung resonance frequency ωw and reduce a vibration of the sprung member B at a frequency band of the sprung resonance frequency ωb as indicated by the solid line in FIGS. 5A and 5B, compared to a case where a thrust force control of the actuator A is performed by obtaining the second vibration suppression force without using the low-pass filter L2 (as indicated by the dotted line in FIGS. 5A and 5B).

Next, a first modification of the second embodiment will be described.

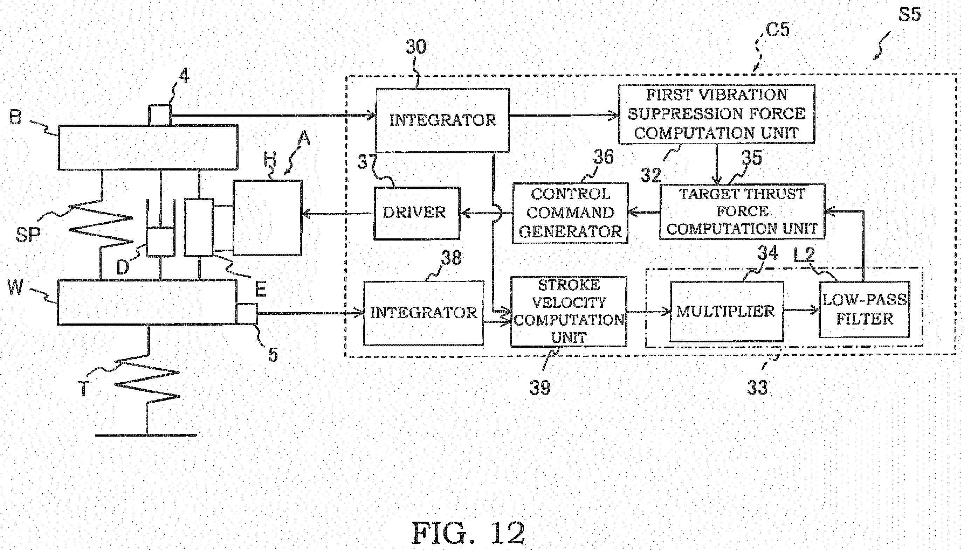

In order to obtain the second vibration suppression force F2, the stroke velocity Vs is necessary. However, as illustrated in FIG. 12, the stroke velocity Vs may be obtained by subtracting the vertical velocity Vw of the unsprung member W from the vertical velocity Vb of the sprung member B.

Specifically, compared to a configuration of the controller C4 of the suspension device S4 of FIG. 10, a controller C5 of a suspension device S5 of FIG. 12 detects an acceleration Gw of the unsprung member W by preparing an acceleration sensor 5 in the unsprung member W instead of the stroke sensor 6. In addition, instead of the differentiator 21, an integrator 38 is provided to obtain a velocity Vw of the unsprung member W by integrating the acceleration Gw of the unsprung member W. Furthermore, a stroke velocity computation unit 39 is provided to obtain the stroke velocity Vs as a vertical relative velocity between the sprung member B and the unsprung member W by subtracting the velocity Vw of the unsprung member W obtained by the integrator 38 from the velocity Vb of the sprung member B obtained by the integrator 30 using the stroke velocity computation unit 39.

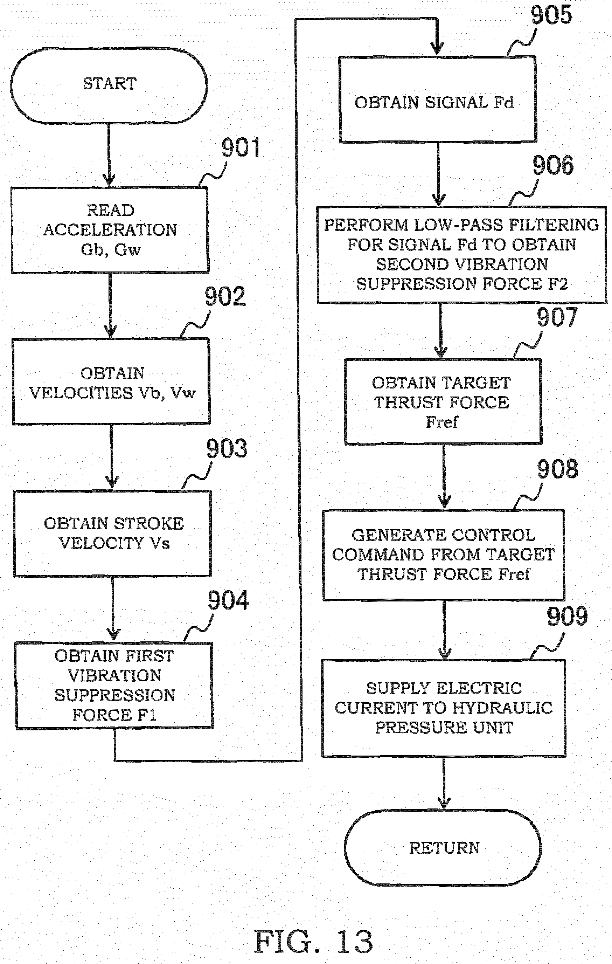

Next, a series of processing flows performed by the controller C5 will be described. As illustrated in the flowchart of FIG. 13, the controller C5 reads the vertical acceleration Gb of the sprung member B and the acceleration Gw of the unsprung member W (step 901). Subsequently, the velocities Vb and the Vw are obtained by integrating the accelerations Gb and Gw (step 902). Then, the controller C5 obtains the stroke velocity Vs by subtracting the velocity Vw from the velocity Vb (step 903). The controller C5 obtains the first vibration suppression force F1 by multiplying the velocity Vb by the gain Cb (step 904). In addition, the controller C5 multiplies the stroke velocity Vs by the gain Cs to obtain the signal Fd (step 905), and performs filtering for the obtained signal Fd using the low-pass filter L2 to obtain the second vibration suppression force F2 by removing a frequency component exceeding the frequency band of the unsprung resonance frequency ωw from the signal Fd (step 906).

The controller C5 adds the first vibration suppression force F1 and the second vibration suppression force F2 to obtain the target thrust force Fref (step 907). In addition, the controller C5 generates a control command from the target thrust force Fref (step 908) and supplies an electric current from the driver 37 to the switching member and the hydraulic pressure source of the hydraulic pressure unit H (step 909). By repeating the aforementioned process, the controller C5 controls the actuator A. Note that the aforementioned series of processing flows are just for illustrative purposes and may be changed appropriately.

Similarly, in the suspension device S5 and the controller C5 as a suspension control unit described above, the target thrust force Fref of the actuator A is obtained on the basis of the second vibration suppression force F2 processed by the low-pass filter L2. For this reason, for vibrations of the sprung member B and the unsprung member W in a frequency area around the unsprung resonance frequency ωw and higher, the thrust force Fref generated by the actuator A is significantly reduced. Therefore, in this case, the vibrations of the sprung member B and the unsprung member W are suppressed by the passive damping force of the damper D.

Therefore, similar to the suspension device S4 and the controller C4, using the suspension device S5 and the controller C5 as a suspension control unit, it is possible to improve a vehicle ride quality without using a high-responsiveness device.

Next, a second modification of the second embodiment will be described.

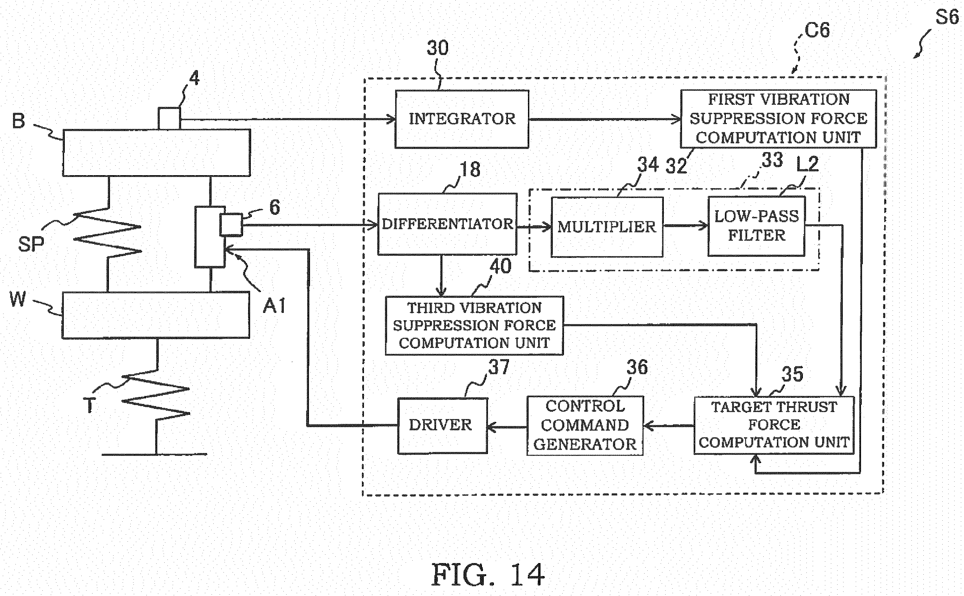

In the suspension devices S4 and S5 described above, the damper D is provided in parallel with the actuator A. Alternatively, as illustrated in FIG. 14, the damper D may be omitted, and the actuator A1 may exert a damping force to be generated by the damper.

Specifically, in the suspension device S6, the controller C6 additionally has a third vibration suppression force computation unit 40 that obtains a third vibration suppression force F3 by multiplying the stroke velocity Vs by a gain Cp corresponding to the damping coefficient of the damper, compared to the controller C4 of the suspension device S4 of FIG. 10. The third vibration suppression force F3 is a force corresponding to the damping force generated by the omitted damper D.

In the target thrust force computation unit 35, the target thrust force Fref is obtained by adding the first vibration suppression force F1, the second vibration suppression force F2, and the third vibration suppression force F3. In this manner, since the third vibration suppression force F3 is added to the target thrust force Fref, the actuator A1 exerts the damping force instead of the omitted damper D. Even in this case, it is possible to improve a vehicle ride quality using the suspension device S6 and the controller C6 as a suspension control unit.

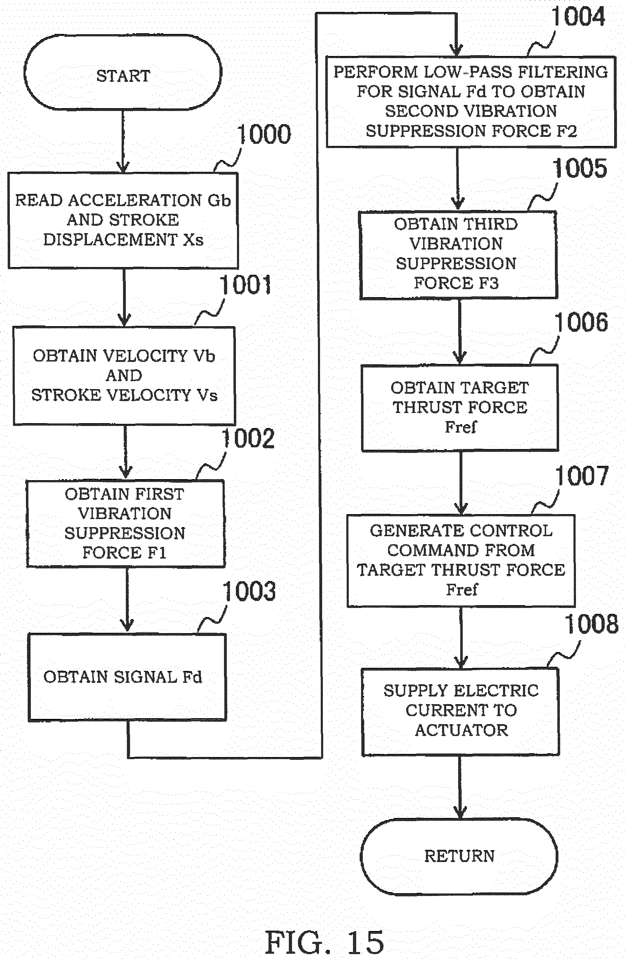

Next, a series of processing flows performed by the controller C6 will be described. As illustrated in the flowchart of FIG. 15, the controller C6 reads the vertical acceleration Gb of the sprung member B and the stroke displacement Xs of the extensible/contractible body E (step 1000). Subsequently, the velocity Vb is obtained by integrating the acceleration Gb, and the stroke velocity Vs is obtained by differentiating the stroke displacement Xs (step 1001). Then, the controller C6 obtains the first vibration suppression force F1 by multiplying the velocity Vb by the gain Cb (step 1002). In addition, the controller C6 obtains the signal Fd by multiplying the velocity Vs by the gain Cs (step 1003), and filtering is performed for the obtained signal Fd using the low-pass filter L2, so that the second vibration suppression force F2 is obtained by removing a frequency component exceeding the unsprung resonance frequency ωw from the signal Fd (step 1004).

The controller C6 obtains the third vibration suppression force F3 by multiplying the stroke velocity Vs by the gain Cp (step 1005). In addition, the controller C6 obtains the target thrust force Fref by adding the first vibration suppression force F1, the second vibration suppression force F2, and the third vibration suppression force F3 (step 1006). In addition, the controller C6 generates the control command from the target thrust force Fref (step 1007) and supplies an electric current to the actuator A1 from the driver 37 (step 1008). By repeating this process, the controller C6 controls the actuator A1. Note that the aforementioned processing flow is just for illustrative purposes, and may be changed appropriately.

Even in the suspension device S6 and the controller C6 as a suspension control unit, the target thrust force Fref of the actuator A1 is obtained on the basis of the second vibration suppression force F2 processed by the low-pass filter L2. In addition, the third vibration suppression force F3 obtained from the stroke velocity Vs is added to the target thrust force Fref. Therefore, it is possible to generate the damping force using the actuator A1 instead of the damper.

For this reason, for vibrations of the sprung member B and the unsprung member W in the frequency area around the unsprung resonance frequency ωw and higher, the first vibration suppression force F1 and the second vibration suppression force F2 actively generated by the actuator A1 as an actuator become very small, so that the vibrations of the sprung member B and the unsprung member W are suppressed by the third vibration suppression force F3 (damping force) generated by the actuator A1 as a damper.

In order to generate the damping force to be generated by the damper by the actuator A1, control responsiveness is obtained up to a frequency band of the unsprung resonance frequency ωw. In the suspension device S6 and the controller C6 as a suspension control unit, an electromagnetic actuator that does not use a hydraulic pressure is employed as the actuator A1. Therefore, it is possible to obtain control responsiveness up to a frequency band of the unsprung resonance frequency ωw and improve a vehicle ride quality.

Since the damping force to be generated by the damper can be generated by the actuator A1, it is possible to omit the damper D. For this reason, it is possible to reduce the manufacturing cost of the suspension device S6.

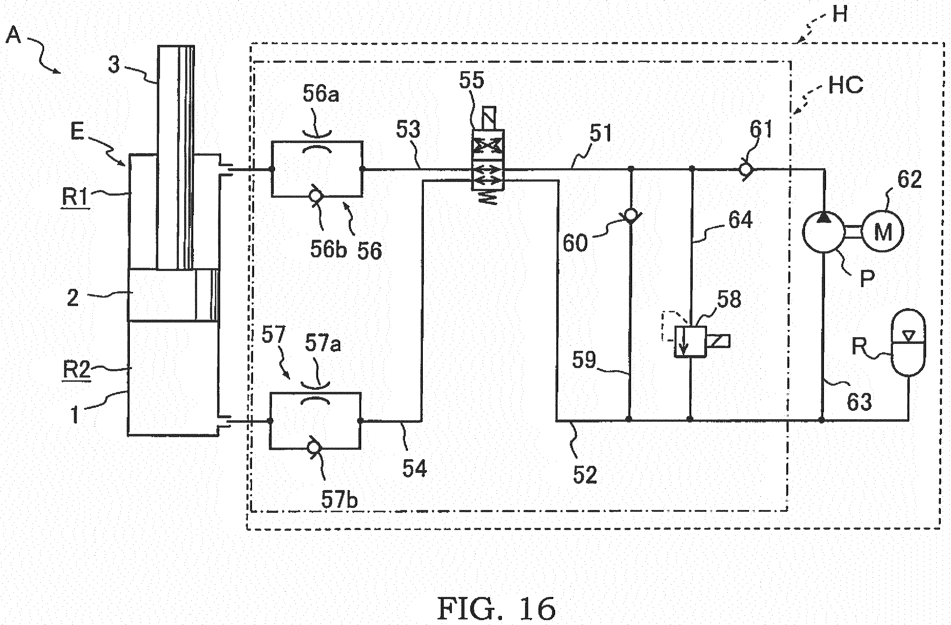

Next, an exemplary configuration of the actuator A suitable for the suspension devices S1, S2, S4, and S5 will be described in details with reference to FIG. 16.

The actuator A includes an extensible/contractible body E provided with a cylinder 1, a piston 2 movably inserted into the cylinder 1 to partition the cylinder 1 into an extension-side chamber R1 and a contraction-side chamber R2, and a rod 3 movably inserted into the cylinder 1 and connected to the piston 2, and a hydraulic pressure unit H that supplies and distributes a fluid to the extension-side chamber R1 and the contraction-side chamber R2 to extensibly or contractibly drive the extensible/contractible body E. The extension-side chamber R1 is a chamber compressed during an extension stroke, and the contraction-side chamber R2 is a chamber compressed during a contraction stroke.

The hydraulic pressure unit H includes a pump P, a reservoir R connected to a suction side of the pump P, and a hydraulic circuit HC provided between the extensible/contractible body E and an assembly of the pump P and the reservoir R.

The hydraulic circuit HC includes a supply channel 51 connected to a discharge side of the pump P, a discharge channel 52 connected to the reservoir R, an extension-side passage 53 connected to the extension-side chamber R1, a contraction-side passage 54 connected to the contraction-side chamber R2, a direction switching valve 55 as a switching member that selectively connects one of the extension-side passage 53 and the contraction-side passage 54 to the supply channel 51 and connects the other one of the extension-side passage 53 and the contraction-side passage 54 to the discharge channel 52, an extension-side damping element 56 provided in the extension-side passage 53 to apply resistance to a flow direct from the extension-side chamber R1 to the direction switching valve 55 and allows an opposite flow, a contraction-side damping element 57 provided in the contraction-side passage 54 to apply resistance to a flow from the contraction-side chamber R2 to the direction switching valve 55 and allows an opposite flow, a control valve 58 capable of adjusting a pressure of the supply channel 51 in response to the supplied electric current, a suction passage 59 which connect the supply channel 51 and the discharge channel 52, a suction check valve 60 provided in the middle of the suction passage 59 to allow only a flow of the fluid direct from the discharge channel 52 to the supply channel 51, and a supply-side check valve 61 provided between the control valve 58 and the pump P in the middle of the supply channel 51 to allow only a flow directed from the pump P side to the control valve 58 side.

The extension-side chamber R1 and the contraction-side chamber R2 is filled with a liquid such as hydraulic oil as a hydraulic fluid, and the reservoir R is filled with a liquid and a gas. The liquid filled in the extension-side chamber R1, the contraction-side chamber R2, and the reservoir R may include, for example, water or a water solution as well as the hydraulic oil.

The pump P is a unidirectional discharge type that receives a fluid from the suction side and discharges the fluid to the discharge side and is driven by the motor 62. The motor 62 may be either a DC or AC motor, and various types of motors such as a brushless motor, an induction motor, or a synchronous motor may be employed.

The suction side of the pump P is connected to the reservoir R through the pump passage 63, and the discharge side of the pump P is connected to the supply channel 51. Therefore, as the pump P is driven by the motor 62, the fluid is sucked from the reservoir R and is discharged to the supply channel 51.

The direction switching valve 55 is a 4-port 2-position electromagnetic switching valve and selectively switches a state in which the supply channel 51 communicates with the extension-side passage 53, and the discharge channel 52 communicates with the contraction-side passage 54, and a state in which the supply channel 51 communicates with the contraction-side passage 54, and the discharge channel 52 communicates with the extension-side passage 53. By switching the direction switching valve 55, the fluid supplied from the pump P can be supplied to any one of the extension-side chamber R1 and the contraction-side chamber R2. If the pump 4 is driven while the supply channel 51 communicates with the extension-side passage 53, and the discharge channel 52 communicates with the contraction-side passage 54, the fluid is supplied to the extension-side chamber R1, and the fluid is discharged from the contraction-side chamber R2 to the reservoir R, so that the actuator body A is contracted. Meanwhile, if the pump 4 is driven while the supply channel 51 communicates with the contraction-side passage 54, and the discharge channel 52 communicates with the extension-side passage 53, the fluid is supplied to the contraction-side chamber R2, and the fluid is discharged from the extension-side chamber R1 to the reservoir R, so that the actuator body A is extended.

The extension-side damping element 56 includes an extension-side damping valve 56a that applies resistance to a flow from the extension-side chamber R1 to the direction switching valve 55, and an extension-side check valve 56b provided in parallel with the extension-side damping valve 56a to allow only a flow from the direction switching valve 55 to the extension-side chamber R1. Therefore, since the extension-side check valve 56b is maintained in a closed state for a flow of the fluid moving from the extension-side chamber R1 to the direction switching valve 55, the fluid passes through only the extension-side damping valve 56a and flows to the direction switching valve 55 side. In contrast, for a flow of the fluid moving from the direction switching valve 55 to the extension-side chamber R1, the extension-side check valve 56b is opened. Since the extension-side check valve 56b applies less resistance compared to the extension-side damping valve 56a, the fluid preferentially passes through the extension-side check valve 56a and flows to the extension-side chamber R1 side. The extension-side damping valve 56a may be a throttling valve that allows a bidirectional flow or a damping valve such as a leaf valve or a poppet valve that allows only a flow directed from the extension-side chamber R1 to the direction switching valve 55.

The contraction-side damping element 57 includes a contraction-side damping valve 57a that applies resistance to a flow from the contraction-side chamber R2 to the direction switching valve 55, and a contraction-side check valve 57b provided in parallel with the contraction-side damping valve 57a to allow only a flow directed from the direction switching valve 55 to the contraction-side chamber R2. Therefore, since the contraction-side check valve 57b is maintained in a closed state for a flow of the fluid moving from the contraction-side chamber R2 to the direction switching valve 55, the fluid passes through only the contraction-side damping valve 57a and flows to the direction switching valve 55 side. In contrast, for a flow of the fluid moving from the direction switching valve 55 to the contraction-side chamber R2, the contraction-side check valve 57b is opened. Since the contraction-side check valve 57b applies less resistance to the flow compared to the contraction-side damping valve 57a, the fluid preferentially passes through the contraction-side check valve 57b and flows to the contraction-side chamber R2 side. The contraction-side damping valve 57a may be a throttling valve that allows a bidirectional flow or a damping valve such as a leaf valve or a poppet valve that allows only a flow directed from the contraction-side chamber R2 to the direction switching valve 55.

The control valve 58 is an electromagnetic valve and is provided in the middle of a control passage 64 that connects the supply channel 51 and the discharge channel 52 in parallel with the suction passage 59. A pressure of the supply channel 51 in the upstream side of the control valve 58 can be controlled by adjusting a valve release pressure of the control valve 58. The valve release pressure of the control valve 58 changes in proportion to the supplied electric current amount. As the supplied current amount increases, the valve release pressure increases. If no electric current is supplied, the valve release pressure is minimized. In addition, the control valve 58 has a characteristic having no pressure override in which a pressure loss increases in proportion to a flow rate in a practical area of the suspension devices S1, S2, S4, and S5. Note that the "practical area" refers to, for example, an area where the extensible/contractible body E is extended or contracted within a range of a velocity of 1 m/sec, and the "characteristic having no pressure override in which a pressure loss increases in proportion to a flow rate of the control valve 58" in this practical area means that the pressure override is negligible for the flow rate passing through the control valve 58 when the extensible/contractible body E is extended or contracted within a range of a velocity of 1 m/sec. In addition, the valve release pressure of the control valve 58 in a non-conduction state is very small, and nearly no resistance is applied to the flow of the fluid passing in the non-conduction state.

Since the supply-side check valve 61 is provided between the control valve 58 and the pump P in the middle of the supply channel 51, it is possible to prevent the fluid from reversely flowing to the pump P side by closing the supply-side check valve 61 even when the pressure of the direction switching valve 55 side is higher than the discharge pressure of the pump P.

Using the actuator A configured as described above, it is possible to actively extend or contract the extensible/contractible body E by driving the pump P using the motor 62, supplying the fluid discharged from the pump P to one of the extension-side chamber R1 and the contraction-side chamber R2 connected to the pump P, and allowing the other one to communicate with the reservoir R through the discharge channel 52 by using the direction switching valve 55.

If the extensible/contractible body E is extended or contracted by an external force, the liquid discharged from the extension-side chamber R1 as the extension-side chamber R1 is compressed passes through the extension-side damping valve 56a and then reaches the reservoir R through the control valve 58 or reaches the reservoir R without passing through the control valve 58 depending on a switching state of the direction switching valve 55. In any case, the liquid discharged from the extension-side chamber R1 inevitably passes through the extension-side damping valve 56a. Therefore, a damping force that hinders extension of the extensible/contractible body E is applied.

Meanwhile, if the extensible/contractible body E is extended or contracted by an external force, the liquid discharged from the contraction-side chamber R2 as the contraction-side chamber R2 is compressed passes through the contraction-side damping valve 57a and then reaches the reservoir R through the control valve 58 or reaches the reservoir R without passing through the control valve 58 depending on a switching state of the direction switching valve 55. In any case, the liquid discharged from the contraction-side chamber R2 inevitably passes through the contraction-side damping valve 57a. Therefore, a damping force that hinders contraction of the extensible/contractible body E is applied.

That is, the actuator A has a functionality of generating the thrust force for actively extending and contracting the extensible/contractible body E and serves as a passive damper for a vibration input caused by an external force.

In this manner, the actuator A serves as both the actuator and the damper. Therefore, if the actuator A is employed in the suspension devices S1, S2, S4, and S5, the actuator A can serve as a damper for a vibration input having a frequency equal to or higher than the unsprung resonance frequency $\omega$w. For this reason, it is not necessary to separately provide the damper D in addition to the actuator A. Therefore, it is possible to reduce the manufacturing cost for the suspension devices S1, S2, S4, and S5. Note that the actuator A serving as a damper D is not limited to the actuator A having the aforementioned structure. Instead, the actuator A may have any other structure.

Embodiments of the present invention were described above, but the above embodiments are merely examples of applications of the present invention, and the technical scope of the present invention is not limited to the specific constitutions of the above embodiments.

This application claims priority based on Japanese Patent Application No. 2014-226735 filed with the Japan Patent Office on November 7, 2014, the entire contents of which are incorporated into this specification.

**Claims**

1.  A suspension device comprising:

    an actuator interposed between a sprung member and an unsprung member of a vehicle and capable of generating a thrust force; and
    a controller configured to control the actuator, wherein
    the controller includes:

a first vibration suppression force computation unit configured to obtain a first vibration suppression force from a vertical velocity of the sprung member,

a second vibration suppression force computation unit configured to obtain a second vibration suppression force from a vertical velocity of the unsprung member or a relative velocity between the sprung member and the unsprung member,

a low-pass filter having a breakpoint frequency between a sprung resonance frequency and an unsprung resonance frequency and processing a signal in a course of obtaining the second vibration suppression force in the second vibration suppression force computation unit, and

a target thrust force computation unit configured to obtain a target thrust force of the actuator on the basis of the first vibration suppression force and the second vibration suppression force.

2. The suspension device according to claim 1, wherein the target thrust force is obtained by adding the first vibration suppression force and the second vibration suppression force when the second vibration suppression force is obtained from the vertical velocity of the unsprung member.

3. The suspension device according to claim 1, wherein the target thrust force is obtained by subtracting the second vibration suppression force from the first vibration suppression force when the second vibration suppression force is obtained from the relative velocity between the sprung member and the unsprung member.

4. The suspension device according to claim 1, further comprising a passive damper interposed between the sprung member and the unsprung member of the vehicle in parallel with the actuator,

wherein the controller obtains the second vibration suppression force by multiplying the vertical velocity of the unsprung member or the relative velocity between the sprung member and the unsprung member by a gain equal to a damping coefficient of the damper.

5. The suspension device according to claim 1, wherein a third vibration suppression force is obtained from the relative velocity between the sprung member and the unsprung member, and

the target thrust force is obtained on the basis of the first vibration suppression force, the second vibration suppression force, and the third vibration suppression force.

6. The suspension device according to claim 1, wherein
   the actuator includes:

   an extensible/contractible body provided with a cylinder and a piston movably inserted into the cylinder to partition the cylinder into an extension-side chamber and a contraction-side chamber,

   a pump,

   a reservoir connected to a suction side of the pump,

   a supply channel connected to a discharge side of the pump,

   a discharge channel connected to the reservoir,

   an extension-side passage connected to the extension-side chamber,

   a contraction-side passage connected to the contraction-side chamber,

   a direction switching valve configured to selectively connect one of the extension-side passage and the contraction-side passage to the supply channel and connect the other one of the extension-side passage and the contraction-side passage to the discharge channel,

   an extension-side damping element provided in the extension-side passage to apply resistance to a flow directed from the extension-side chamber to the direction switching valve and to allow an opposite flow,

   a contraction-side damping element provided in the contraction-side passage to apply resistance to a flow directed from the contraction-side chamber to the direction switching valve and to allow an opposite flow,

   a control valve configured to be capable of adjusting a pressure of the supply channel in response to a supplied electric current,

   a suction passage configured to connect the supply channel and the discharge channel,

   a suction check valve provided in the middle of the suction passage to allow only a flow of a fluid directed from the discharge channel to the supply channel, and

   a supply-side check valve provided between the control valve and the pump in the middle of the supply channel to allow only a flow directed from the pump side to the control valve side.

7. A suspension control unit configured to control an actuator interposed between a sprung member and an unsprung member of a vehicle, the actuator being capable of generating a thrust force, the suspension control unit comprising:

a first vibration suppression force computation unit configured to obtain a first vibration suppression force from a vertical velocity of the sprung member;

a second vibration suppression force computation unit configured to obtain a second vibration suppression force from a vertical velocity of the unsprung member or a relative velocity between the sprung member and the unsprung member;

a low-pass filter having a breakpoint frequency between a sprung resonance frequency and an unsprung resonance frequency and processing a signal in a course of obtaining the second vibration suppression force in the second vibration suppression force computation unit; and

a target thrust force computation unit configured to obtain a target thrust force of the actuator on the basis of the first vibration suppression force and the second vibration suppression force.

8. The suspension control unit according to claim 7, wherein the target thrust force is obtained by adding the first vibration suppression force and the second vibration suppression force when the second vibration suppression force is obtained from the vertical velocity of the unsprung member.

9. The suspension control unit according to claim 7, wherein the target thrust force is obtained by subtracting the second vibration suppression force from the first vibration suppression force when the second vibration suppression force is obtained from the relative velocity between the sprung member and the unsprung member.

10. The suspension control unit according to claim 7, wherein the second vibration suppression force is obtained by multiplying the vertical velocity of the unsprung member or the relative velocity between the sprung member and the unsprung member by a gain equal to a damping coefficient of a passive damper provided between the sprung member and the unsprung member of the vehicle in parallel with the actuator.

11. The suspension control unit according to claim 7, wherein the third vibration suppression force is obtained from the relative velocity between the sprung member and the unsprung member, and
the target thrust force is obtained on the basis of the first vibration suppression force, the second vibration suppression force, and the third vibration suppression force.

FIG. 1

EP 3 216 634 A1

FIG. 2

START

READ ACCELERATIONS
Gb, Gw                          501

OBTAIN VELOCTIES
Vb, Vw                          502

OBTAIN FIRST
VIBRATION
SUPPRESSION
FORCE F1                        503

OBTAIN SIGNAL Fw                504

PERFORM LOW-PASS
FILTERING FOR SIGNAL Fw
TO OBTAIN SECOND
VIBRATION SUPPRESSION
FORCE F2                        505

OBTAIN TARGET
THRUST FORCE Fref               506

GENERATE CONTROL
COMMAND FROM
TARGET THRUST
FORCE Fref                      507

SUPPLY ELECTRIC
CURRENT TO
HYDRAULIC
PRESSURE UNIT                   508

RETURN

FIG. 3

20

FIG. 4

FIG. 5A

FIG. 5B

FIG. 6

EP 3 216 634 A1

START

601
READ ACCELERATION Gb
AND STROKE
DISPLACEMENT Xs

602
OBTAIN VELOCITY Vb
AND STROKE
VELOCITY Vs

603
OBTAIN
VELOCITY Vw

604
OBTAIN FIRST
VIBRATION
SUPPRESSION
FORCE F1

605
OBTAIN SIGNAL Fw

606
PERFORM LOW-PASS FILTERING
FOR SIGNAL Fw TO OBTAIN
SECOND VIBRATION
SUPPRESSION FORCE F2

607
OBTAIN TARGET
THRUST FORCE
Fref

608
GENERATE CONTROL
COMMAND FROM
TARGET THRUST FORCE
Fref

609
SUPPLY ELECTRIC
CURRENT TO HYDRAULIC
PRESSURE UNIT

RETURN

FIG. 7

25

FIG. 8

START

**700**
READ ACCELERATION Gb AND STROKE DISPLACEMENT Xs

**701**
OBTAIN VELOCITY Vb AND STROKE VELOCITY Vs

**702**
OBTAIN VELOCITY Vw

**703**
OBTAIN FIRST VIBRATION SUPPRESSION FORCE F1

**704**
OBTAIN SIGNAL Fw

**705**
PERFORM LOW-PASS FILTERING FOR SIGNAL Fw TO OBTAIN SECOND VIBRATION SUPPRESSION FORCE F2

**706**
OBTAIN THIRD VIBRATION SUPPRESSION FORCE F3

**707**
OBTAIN TARGET THRUST FORCE Fref

**708**
GENERATE CONTROL COMMAND FROM TARGET THRUST FORCE Fref

**709**
SUPPLY ELECTRIC CURRENT TO ACTUATOR

RETURN

FIG. 9

FIG. 10

START

801

READ ACCELERATION Gb
AND STROKE
DISPLACEMENT Xs

802

OBTAIN VELOCITY Vb
AND
STROKE VELOCITY Vs

803

OBTAIN FIRST
VIBRATION
SUPPRESSION
FORCE F1

804

OBTAIN SIGNAL Fd

805

PERFORM LOW-PASS FILTERING
FOR SIGNAL Fd TO OBTAIN
SECOND VIBRATION
SUPPRESSION FORCE F2

806

OBTAIN TARGET
THRUST FORCE
Fref

807

GENERATE CONTROL
COMMAND FROM
TARGET THRUST FORCE
Fref

808

SUPPLY ELECTRIC
CURRENT TO HYDRAULIC
PRESSURE UNIT

RETURN

FIG. 11

EP 3 216 634 A1

FIG. 12

START

901
READ
ACCELERATION
Gb, Gw

902
OBTAIN
VELOCITIES Vb, Vw

903
OBTAIN STROKE
VELOCITY Vs

904
OBTAIN FIRST
VIBRATION
SUPPRESSION
FORCE F1

905
OBTAIN SIGNAL Fd

906
PERFORM LOW-PASS FILTERING
FOR SIGNAL Fd TO OBTAIN
SECOND VIBRATION
SUPPRESSION FORCE F2

907
OBTAIN TARGET
THRUST FORCE
Fref

908
GENERATE CONTROL
COMMAND FROM TARGET
THRUST FORCE Fref

909
SUPPLY ELECTRIC
CURRENT TO HYDRAULIC
PRESSURE UNIT

RETURN

FIG. 13

FIG. 14

START

READ ACCELERATION Gb
AND STROKE
DISPLACEMENT Xs
1000

OBTAIN VELOCITY Vb
AND
STROKE VELOCITY Vs
1001

OBTAIN FIRST
VIBRATION
SUPPRESSION
FORCE F1
1002

OBTAIN SIGNAL Fd
1003

PERFORM LOW-PASS FILTERING
FOR SIGNAL Fd TO OBTAIN
SECOND VIBRATION
SUPPRESSION FORCE F2
1004

OBTAIN THIRD
VIBRATION
SUPPRESSION
FORCE F3
1005

OBTAIN TARGET
THRUST FORCE
Fref
1006

GENERATE CONTROL
COMMAND FROM
TARGET THRUST FORCE
Fref
1007

SUPPLY ELECTRIC
CURRENT TO
ACTUATOR
1008

RETURN

FIG. 15

33

FIG. 16

EP 3 216 634 A1

## INTERNATIONAL SEARCH REPORT

| International application No. |
|---|
| PCT/JP2015/081390 |

**A. CLASSIFICATION OF SUBJECT MATTER**
*B60G17/018*(2006.01)i, *B60G17/015*(2006.01)i, *F16F9/46*(2006.01)i, *F16F15/02*(2006.01)i

According to International Patent Classification (IPC) or to both national classification and IPC

**B. FIELDS SEARCHED**

Minimum documentation searched (classification system followed by classification symbols)
B60G17/018, B60G17/015, F16F9/46, F16F15/02

Documentation searched other than minimum documentation to the extent that such documents are included in the fields searched
Jitsuyo Shinan Koho     1922-1996   Jitsuyo Shinan Toroku Koho   1996-2016
Kokai Jitsuyo Shinan Koho  1971-2016   Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 63-64809 A (Mazda Motor Corp.), 23 March 1988 (23.03.1988), page 5, upper part, left column, line 5 to right column, line 8; fig. 1 to 4 (Family: none) | 1-11 |
| Y | JP 7-300010 A (Mazda Motor Corp.), 14 November 1995 (14.11.1995), paragraphs [0008] to [0009]; fig. 5 (Family: none) | 1-11 |
| Y | JP 2007-40496 A (Honda Motor Co., Ltd.), 15 February 2007 (15.02.2007), paragraphs [0015] to [0016]; fig. 2 (Family: none) | 1-11 |

[X] Further documents are listed in the continuation of Box C.    [ ] See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 27 January 2016 (27.01.16) | 09 February 2016 (09.02.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2015/081390

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 5-221315 A (Sumitomo Metal Industries, Ltd.), 31 August 1993 (31.08.1993), paragraph [0011]; fig. 1 to 5 (Family: none) | 1-11 |
| Y | JP 60-500662 A (Group Lotus Car Companies PLC), 09 May 1985 (09.05.1985), claim 11 & US 4625993 A claim 4 & WO 1984/002886 A1    & EP 114757 A1 | 4,10 |
| Y | JP 2010-95210 A (Toyota Motor Corp.), 30 April 2010 (30.04.2010), fig. 1 (Family: none) | 5,11 |
| Y | US 2009/0138157 A1 (BAE SYSTEMS HAGGLUNDS), 28 May 2009 (28.05.2009), fig. 3 & EP 2058155 A1 | 7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63258207 A

- JP 2014226735 A